(19) Europäisches Patentamt / European Patent Office / Office européen des brevets

(11) **EP 4 249 869 A1**

(12) **EUROPEAN PATENT APPLICATION**
published in accordance with Art. 153(4) EPC

(43) Date of publication:
**27.09.2023 Bulletin 2023/39**

(21) Application number: **21902418.9**

(22) Date of filing: **27.11.2021**

(51) International Patent Classification (IPC):
**G01J 5/00** (2022.01)

(52) Cooperative Patent Classification (CPC):
**G01J 5/80; G01J 5/00; G01J 5/52; G06N 3/04;
G06N 3/08; G06T 7/00**

(86) International application number:
**PCT/CN2021/133761**

(87) International publication number:
**WO 2022/121711 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.12.2020 CN 202011438640**

(71) Applicant: **Huawei Technologies Co., Ltd.
Shenzhen, Guangdong 518129 (CN)**

(72) Inventors:
• **DU, Lin**
  **Shenzhen, Guangdong 518129 (CN)**
• **ZHOU, Yuhao**
  **Shenzhen, Guangdong 518129 (CN)**

(74) Representative: **Maiwald GmbH
Engineering
Elisenhof
Elisenstrasse 3
80335 München (DE)**

(54) **TEMPERATURE MEASURING METHOD AND APPARATUS, DEVICE AND SYSTEM**

(57) This application discloses a temperature measurement method, apparatus, device, and system, and relates to the field of temperature measurement technologies. The temperature measurement method includes: A temperature measurement apparatus obtains a target temperature of a to-be-measured region based on a temperature measurement model and an obtained infrared image of the to-be-measured region (S302); and outputs the target temperature (S303), where the temperature measurement model is a temperature measurement model obtained by training a neural network based on an infrared image of a black body and an infrared image of a preset region. This can improve temperature measurement precision achieved when temperature measurement is performed based on an infrared image.

A training apparatus obtains at least one training sample pair — S101

The training apparatus trains a neural network based on the at least one training sample pair, to obtain a target temperature measurement model — S102

FIG. 4

**Description**

**TECHNICAL FIELD**

This application relates to the field of temperature measurement technologies, and in particular, to a temperature measurement method, apparatus, device, and system.

**BACKGROUND**

As a non-contact temperature measurement technology, an infrared temperature measurement technology has been widely applied. For example, a human body infrared thermometer used in a public place (for example, an airport or a railway station) uses the infrared temperature measurement technology. There are many infrared temperature measurement methods. According to different temperature measurement methods, infrared temperature measurement may be roughly classified into point-by-point analysis-based infrared temperature measurement and full-field analysis-based infrared temperature measurement.

The full-field analysis-based infrared temperature measurement is a temperature measurement technology for measuring a temperature based on a thermal imaging principle. Therefore, a full-field analysis-based infrared temperature measurement system may also be referred to as a thermal imaging temperature measurement system. The thermal imaging temperature measurement system usually uses an infrared optical system to perform infrared thermal imaging on a to-be-measured target on a focal plane of an infrared detector, to obtain an infrared image of the to-be-measured target. Then, the thermal imaging temperature measurement system may determine temperature field distribution in the infrared image based on a grayscale value of the obtained infrared image and preset calibration data. However, currently, an algorithm used to obtain the calibration data used by the thermal imaging temperature measurement system to analyze the temperature field distribution in the infrared image is relatively simple, resulting in a problem of low temperature measurement precision of a current thermal imaging temperature measurement system.

Based on this, how to improve the temperature measurement precision of the thermal imaging infrared temperature measurement system is a technical problem to be urgently resolved in the conventional technology.

**SUMMARY**

This application provides a temperature measurement method, apparatus, device, and system, to improve temperature measurement precision of thermal imaging infrared temperature measurement.

To achieve the objectives, this application provides the following technical solutions.

According to a first aspect, this application provides a temperature measurement method. The method includes: obtaining an infrared image of a to-be-measured region; obtaining a target temperature of the to-be-measured region based on the infrared image of the to-be-measured region and a temperature measurement model; and outputting the target temperature. The temperature measurement model is obtained through training based on an infrared image of a black body and an infrared image of a preset region.

Because the temperature measurement model is obtained through joint training based on the infrared image of the black body and the infrared image of the preset region, an objective of calibrating the temperature of the preset region by using a temperature of the black body in a process of training the temperature measurement model is achieved. Therefore, the temperature measurement model obtained through training based on the infrared image of the black body and the infrared image of the preset region has high temperature measurement precision. In this way, the temperature measurement method provided in this application for obtaining the target temperature of the to-be-measured region by using the temperature measurement model can improve temperature measurement precision.

In a possible design manner, the obtaining a target temperature of the to-be-measured region based on the infrared image of the to-be-measured region and a temperature measurement model includes: using the infrared image of the to-be-measured region as an input parameter of the temperature measurement model, to obtain the target temperature of the to-be-measured region by using the temperature measurement model.

In this possible implementation, when the target temperature of the to-be-measured region is obtained by using the temperature measurement model, only the infrared image of the to-be-measured region needs to be input to the temperature measurement model as an input parameter, and the target temperature of the to-be-measured region can be obtained by performing an operation on the infrared image of the to-be-measured region by using the temperature measurement model. That is, in the temperature measurement method provided in this application, without calibrating the measured temperature by using the black body in real time, temperature measurement can be performed with high precision. In other words, the temperature measurement method provided in this application improves application convenience.

In another possible design manner, the method further includes: obtaining an updated temperature measurement model from a server or a cloud, and obtaining the target temperature of the to-be-measured region based on the infrared image of the to-be-measured region and the updated temperature measurement model.

The server may be any server that is connected to and communicates with a temperature measurement apparatus through internet (internet). The server may further train a pre-trained temperature measurement model (or a preset temperature measurement model), to obtain the updated temperature measurement model. Alternatively, the updated temperature measurement model may be preset in the server.

The updated temperature measurement model may be obtained after the temperature measurement model is further trained based on updated sample data. For example, the server further trains the pre-trained temperature measurement model (or the preset temperature measurement model) based on the updated sample data, to obtain the updated temperature measurement model. It should be understood that the precision of the temperature measurement model may be further improved by further updating the temperature measurement model.

In this possible implementation, the temperature measurement apparatus may obtain the updated temperature measurement model from the server (or the cloud) through a network, and obtain the temperature of the to-be-measured region based on the updated temperature measurement model. In this way, in the temperature measurement method provided in this application, when the latest temperature measurement model is used to measure the temperature of the to-be-measured region, the temperature measurement precision is further improved.

In another possible design manner, the preset region is a region in which a temperature needs to be measured in an infrared image obtained by photographing a preset object; and the to-be-measured region is a region in which a temperature needs to be measured in an infrared image of a to-be-measured target.

Type attributes of the preset object and the to-be-measured target are the same. For example, the type attributes of both the preset object and the to-be-measured target are human bodies. In this case, the preset region may be a forehead region, a wrist region, or the like in an infrared image of any human body, and the to-be-measured region may be a forehead region, a wrist region, or the like in an infrared image of a to-be-measured person.

In this possible implementation, the temperature measurement model obtained through training based on the infrared image of the region (for example, the forehead region or the wrist region) in which a temperature needs to be measured in the infrared image of the human body may be used to determine the target temperature of the to-be-measured region (for example, the forehead region or the wrist region) of the to-be-measured target with high precision.

In another possible design manner, any temperature generated by the black body is a constant temperature.

In this possible design, each temperature generated by the black body is constant. Therefore, after an infrared image of the black body for which a preset temperature is set is captured, when the temperature measurement model is trained, the preset temperature of the black body may be used as an actual temperature of the black body to calculate a loss function, to implement iterative training of the temperature measurement model until convergence. In this way, the temperature measurement model obtained through training based on the infrared image of the black body with the preset temperature has high temperature measurement precision.

In another possible design manner, the obtaining an infrared image of a to-be-measured region includes: obtaining the infrared image of the to-be-measured target; and recognizing the to-be-measured region from the infrared image of the to-be-measured target, to obtain the infrared image of the to-be-measured region.

In another possible design manner, the obtaining the infrared image of the to-be-measured target includes: receiving the infrared image of the to-be-measured target; or obtaining the infrared image of the to-be-measured target from a local gallery.

The local gallery may be a gallery stored in a local memory of the temperature measurement apparatus. Herein, an image in the local gallery may be an image captured by the temperature measurement apparatus, an image obtained by the temperature measurement apparatus from another device in advance, or the like.

In the foregoing two possible implementations, in the temperature measurement method provided in this application, the infrared image of the to-be-measured region may be obtained in a plurality of manners. An implementation is flexible.

In another possible design manner, the outputting the target temperature includes: outputting the target temperature by using text or audio.

In this possible implementation, in the temperature measurement method provided in this application, the obtained target temperature of the to-be-measured region may be output to a user in a plurality of manners. An implementation is flexible, and user experience is good.

In another possible design manner, the method further includes: sending the infrared image of the to-be-measured region to a training apparatus, where the infrared image of the to-be-measured region is used by the training apparatus to update the temperature measurement model.

In this possible implementation, in the method provided in this application, in a process of performing temperature measurement by using the temperature measurement model, the infrared image of the to-be-measured region is further sent to the training apparatus. When obtaining a large quantity of infrared images of the to-be-measured region, the training apparatus may use these infrared images as new training samples, and may further train the temperature measurement model with reference to the infrared image of the black body, to update the temperature measurement model, so that the temperature measurement precision of the temperature measurement model is further improved.

In another possible design manner, the temperature measurement model is obtained by training a neural network based on at least one training sample pair. Any one of the at least one training sample pair includes a first image and a second image. The first image is an infrared image of the black body for which a preset temperature is set, and the first image includes a temperature label indicating the preset temperature. The second image is an infrared image of the preset region.

It should be noted that the at least one training sample pair usually represents a plurality of or even a relatively large quantity of training sample pairs. This is because a larger quantity of training sample pairs used to train the temperature measurement model indicates that the temperature measurement model obtained through training is more stable and has higher temperature measurement precision.

In this way, in this possible design, the temperature measurement model may be obtained by training the neural network based on a plurality of training sample pairs that include an infrared image (namely, the first image) of the black body for which the preset temperature is set and an infrared image (namely, the second image) of the preset region. In a process of training the temperature measurement model, the temperature measurement model is trained by using an infrared image (namely, a first-type image) of the black body that includes a temperature label. In addition, in a process of training the temperature measurement model based on the first-type image, a domain adaptation layer is further used to enable the first-type image to learn of a feature of an infrared image (namely, a second-type image) of the preset region that includes no label. In this way, the temperature measurement model trained based on the first-type image can also be used to accurately measure a temperature of the preset region in the second-type image. In this way, when a temperature of the preset region in an infrared image is measured by using the temperature measurement model obtained through training by using the method, high temperature measurement precision is achieved.

In another possible design manner, the preset temperature is used as an actual temperature of the black body, and is used to determine, when the temperature measurement model is trained, a first loss function corresponding to the first image.

In another possible design manner, infrared images of the black body in different training sample pairs in the at least one training sample pair are infrared images that are captured by a camera apparatus and that are of the black body at different locations in a field of view. It may be learned that the black body has different imaging locations in the infrared images of the black body in the training sample pair. In this possible design, when infrared images including the black body at different imaging locations are used to train the temperature measurement model, impact of the different imaging locations of the black body on temperature measurement precision can be reduced.

The camera apparatus may be an infrared camera apparatus or an infrared imaging apparatus. The camera apparatus is configured to capture the infrared image of the preset object or the to-be-measured target. The black body located at different locations may be a black body for which a same preset temperature is set, or may be a black body for which different preset temperatures are set.

In another possible design manner, infrared images of the black body in the at least one training sample pair are captured by using a same camera apparatus. The same camera apparatus may be a same infrared camera apparatus, or may be infrared camera apparatuses of a same type or model.

In another possible design manner, the black body has different imaging locations in the infrared images of the black body in the at least one training sample pair.

In another possible design manner, the any training sample pair is used to determine the first loss function and a second loss function. The temperature measurement model is obtained by training the neural network based on a first loss function and a second loss function corresponding to each of the at least one training sample pair. The first loss function is determined based on a measured temperature that is of the black body in the first image and that is measured by the neural network and the preset temperature indicated by the temperature label in the first image. The second loss function is determined based on a difference that is between a feature of the first image and a feature of the second image and that is determined by the neural network.

In the foregoing three possible designs, a dedicated temperature measurement model for a same camera apparatus may be obtained through training by using infrared images captured by using the same camera apparatus. In this way, in comparison with a general temperature measurement model, the temperature measurement precision can be further improved when the target temperature of the to-be-measured region is measured by using the temperature measurement model.

In another possible design manner, infrared images of the black body in the at least one training sample pair are captured by using different camera apparatuses; and the first image further includes a camera apparatus label, and the camera apparatus label indicates a camera apparatus that obtains the first image; or the second image includes a camera apparatus label, and the camera apparatus label indicates a camera apparatus that obtains the second image.

In another possible design manner, the any training sample pair is used to determine the first loss function, a second loss function, and a third loss function corresponding to the any training sample pair. The temperature measurement model is obtained by training the neural network based on a first loss function, a second loss function, and a third loss function corresponding to each of the at least one training sample pair. The first loss function is determined based on a measured temperature that is of the black body in the first image and that is measured by the neural network and the preset temperature indicated by the temperature label in the first image. The second loss function is determined based on a difference that is between a feature of the first image and a feature of the second image and that is determined by the neural network. The third loss function is determined based on a camera apparatus that is predicted by the neural network and that is used to capture the first image and the camera apparatus indicated by the camera apparatus label in the first image, or the third loss function is determined based on a camera apparatus that is predicted by the neural network and that is used to capture the second image and the camera apparatus indicated by the camera apparatus label in the second image.

In the foregoing two possible designs, a general temperature measurement model applicable to different camera apparatuses may be obtained through training by using infrared images captured by using the different camera apparatuses. That is, the temperature measurement model may be used to accurately measure temperatures of the to-be-measured region in the infrared images captured by using the different camera apparatuses. In other words, both the temperature measurement precision and robustness of the temperature measurement model are improved.

According to a second aspect, an embodiment of this application provides a training method for a temperature measurement model. The method includes: obtaining at least one training sample pair; and training a neural network based on the at least one training sample pair, to obtain a target temperature measurement model. The target temperature measurement model is used to determine a target temperature of a to-be-measured region based on an infrared image of the to-be-measured region of a to-be-measured target. Any one of the at least one training sample pair includes a first image and a second image. The first image is an infrared image of a black body for which a preset temperature is set, and the first image includes a temperature label indicating the preset temperature. The second image is an infrared image of a preset region.

In the training method for a temperature measurement model provided in this application, the temperature measurement model is trained by using an infrared image (namely, a first-type image) of the black body that includes a temperature label, and in a process of training the temperature measurement model based on the first-type image, a domain adaptation layer is used to enable the first-type image to learn of a feature of an infrared image (namely, a second-type image) of the preset region that includes no label. In this way, the temperature measurement model trained based on the first-type image can also be used to accurately measure a temperature of the preset region in the second-type image. Therefore, the temperature measurement model obtained through training by using the method can improve temperature measurement precision when a temperature of the preset region in an infrared image is measured.

In a possible design manner, infrared images of the black body in different training sample pairs in the at least one training sample pair are infrared images of the black body that is located at different locations in a field of view of a camera apparatus and that has different preset temperatures or a same preset temperature. It may be learned that the black body has different imaging locations in the infrared images of the black body in the training sample pair.

In this possible design, when infrared images including the black body at different imaging locations are used to train the temperature measurement model, impact of the different imaging locations of the black body on temperature measurement precision can be reduced.

In another possible design manner, infrared images of the black body in the at least one training sample pair are captured by using a same camera apparatus. The black body having the preset temperature has different imaging locations in the infrared images of the black body that are captured by using the same camera apparatus.

In another possible design manner, the training a neural network based on the at least one training sample pair, to obtain a target temperature measurement model includes: obtaining a first loss function and a second loss function corresponding to each of the at least one training sample pair; and performing iterative training on the neural network based on the first loss function and the second loss function corresponding to each training sample pair, to obtain the target temperature measurement model. A first loss function corresponding to the any training sample pair is determined based on a measured temperature that is of the black body in the first image and that is measured by the neural network and the preset temperature indicated by the temperature label in the first image. A second loss function corresponding to the any training sample pair is determined based on a difference that is between a feature of the first image and a feature of the second image and that is determined by the neural network.

In the foregoing two possible implementations, a dedicated temperature measurement model for a same camera apparatus may be obtained through training by using infrared images captured by using the same camera apparatus. In this way, in comparison with a general temperature measurement model, the temperature measurement precision can be further improved when the target temperature of the to-be-measured region is measured by using the temperature measurement model.

In another possible design manner, infrared images of the black body in the at least one training sample pair are captured by using different camera apparatuses; and the first image further includes a camera apparatus label, and the camera apparatus label indicates a camera apparatus that obtains the first image; or the second image includes a camera apparatus label, and the camera apparatus label indicates a camera apparatus that obtains the second image.

In another possible design manner, if the first image further includes the camera apparatus label indicating the camera apparatus used to capture the first image, the method further includes: the training a neural network based on the at least one training sample pair, to obtain a target temperature measurement model includes: obtaining a first loss function, a second loss function, and a third loss function corresponding to each of the at least one training sample pair; and performing iterative training on the neural network based on the first loss function, the second loss function, and the third loss function corresponding to each training sample pair, to obtain the target temperature measurement model. A first loss function corresponding to the any training sample pair is determined based on a measured temperature that is of the black body in the first image and that is measured by the neural network and the preset temperature indicated by the temperature label in the first image. A second loss function corresponding to the any training sample pair is determined based on a difference that is between a feature of the first image and a feature of the second image and that is determined by the neural network. A third loss function corresponding to the any training sample pair is determined based on a camera apparatus that is predicted by the neural network and that is used to capture the first image and the camera apparatus indicated by the camera apparatus label in the first image.

In another possible design manner, if the second image includes the camera apparatus label indicating the camera apparatus used to capture the second image, the training a neural network based on the at least one training sample pair, to obtain a target temperature measurement model includes: obtaining a first loss function, a second loss function, and a third loss function that are corresponding to each of the at least one training sample pair; and performing iterative training on the neural network based on the first loss function, the second loss function, and the third loss function corresponding to each training sample pair, to obtain the target temperature measurement model. A first loss function corresponding to the any training sample pair is determined based on a measured temperature that is of the black body in the first image and that is measured by the neural network and the preset temperature indicated by the temperature label in the first image. A second loss function corresponding to the any training sample pair is determined based on a difference that is between a feature of the first image and a feature of the second image and that is determined by the neural network. A third loss function corresponding to the any training sample pair is determined based on a camera apparatus that is predicted by the neural network and that is used to capture the second image and the camera apparatus indicated by the camera apparatus label in the second image.

In another possible design manner, the neural network includes a gradient reversal layer configured to obtain an opposite of the third loss function, and the performing iterative training on the neural network based on the first loss function, the second loss function, and the third loss function corresponding to each training sample pair, to obtain the target temperature measurement model includes: performing iterative training on the neural network based on the first loss function and the second loss function corresponding to each training sample pair, and the opposite of the third loss function that is obtained by the gradient reversal layer, to obtain the target temperature measurement model.

In the foregoing several possible implementations, a general temperature measurement model applicable to different camera apparatuses may be obtained through training by using infrared images captured by using the different camera apparatuses. That is, the temperature measurement model may be used to accurately measure temperatures of the to-be-measured region in the infrared images captured by using the different camera apparatuses. In other words, both the temperature measurement precision and robustness of the temperature measurement model are improved.

In another possible design manner, the method further includes: receiving the infrared image of the to-be-measured region that is sent by a temperature measurement apparatus; and training the target temperature measurement model based on the infrared image of the to-be-measured region, to update the target temperature measurement model.

In this possible implementation, when obtaining a large quantity of infrared images of the to-be-measured region, the training apparatus may use these infrared images as new training samples, and may further train the temperature measurement model with reference to the infrared image of the black body, to update the temperature measurement model, so that the temperature measurement precision of the temperature measurement model is further improved.

According to a third aspect, this application provides a temperature measurement apparatus.

In a possible design manner, the temperature measurement apparatus is configured to perform any method provided in the first aspect. In this application, the temperature measurement apparatus may be divided into functional modules based on the any method provided in the first aspect. For example, each functional module may be obtained through division based on each corresponding function, or two or more functions may be integrated into one processing module. For example, in this application, the temperature measurement apparatus may be divided into an obtaining unit, an output unit, a recognition unit, and a sending unit based on functions. For descriptions of possible technical solutions performed by the functional modules obtained through division and beneficial effects, refer to the technical solutions provided in the first aspect or the corresponding possible designs of the first aspect. Details are not described herein.

In another possible design, the temperature measurement apparatus includes a memory and one or more processors. The memory is coupled to the processor. The memory is configured to store computer instructions. The processor is configured to invoke the computer instructions to perform any method provided in any one of the first aspect and the possible design manners of the first aspect.

According to a fourth aspect, this application provides a training apparatus for a temperature measurement model.

In a possible design manner, the training apparatus is configured to perform any method provided in the second aspect. In this application, the training apparatus may be divided into functional modules based on the any method provided in the second aspect. For example, each functional module may be obtained through division based on each corresponding function, or two or more functions may be integrated into one processing module. For example, in this application, the training apparatus may be divided into an obtaining unit and a training unit based on functions. For descriptions of possible technical solutions performed by the functional modules obtained through division and beneficial effects, refer to the technical solutions provided in the second aspect or the corresponding possible designs of the second aspect. Details are not described herein.

In another possible design, the training apparatus includes a memory and one or more processors. The memory is coupled to the processor. The memory is configured to store computer instructions. The processor is configured to invoke the computer instructions to perform any method provided in any one of the second aspect and the possible design manners of the second aspect.

According to a fifth aspect, this application provides a temperature measurement device. The temperature measurement device includes a processor and a camera apparatus. The camera apparatus is an infrared camera apparatus or an infrared imaging apparatus. The camera apparatus is configured to capture an infrared image of a to-be-measured target. The processor is configured to perform any method provided in any possible implementation of the first aspect, to obtain a target temperature of a to-be-measured region in the infrared image of the to-be-measured target.

According to a sixth aspect, this application provides a temperature measurement system. The system includes a computing device and a camera device. The camera device may be an infrared camera device or an infrared imaging device. The camera device is configured to obtain an infrared image of a to-be-measured region. The to-be-measured region is a region in which a temperature needs to be measured in an infrared image of a to-be-measured target. The computing device is configured to perform any method provided in any possible implementation of the first aspect, to obtain a target temperature of the to-be-measured region in the infrared image of the to-be-measured target.

According to a seventh aspect, this application provides a computer-readable storage medium, for example, a non-transient computer-readable storage medium. The computer-readable storage medium stores a computer program (or instructions). When the computer program (or the instructions) is run on a temperature measurement apparatus, the temperature measurement apparatus is enabled to perform any method provided in any possible implementation of the first aspect.

According to an eighth aspect, this application provides a computer-readable storage medium, for example, a non-transient computer-readable storage medium. The computer-readable storage medium stores a computer program (or instructions). When the computer program (or the instructions) is run on a training apparatus for a temperature measurement model, the training apparatus is enabled to perform any method provided in any possible implementation of the second aspect.

According to a ninth aspect, this application provides a computer program product. When the computer program product is run on a temperature measurement apparatus, any method provided in any possible implementation of the first aspect is performed.

According to a tenth aspect, this application provides a computer program product. When the computer program product is run on a training apparatus for a temperature measurement model, any method provided in any possible implementation of the second aspect is performed.

According to an eleventh aspect, this application provides a chip system, including a processor. The processor is configured to: invoke a computer program from a memory, and run the computer program stored in the memory, to perform any method provided in the implementations of the first aspect or the second aspect.

It may be understood that any one of the apparatus, the computer storage medium, the computer program product, the chip system, or the like provided above may be used in the corresponding method provided above. Therefore, for beneficial effects that can be achieved by any one of the apparatus, the computer storage medium, the computer program product, the chip system, or the like, refer to the beneficial effects of the corresponding method. Details are not described herein.

In this application, a name of the temperature measurement apparatus, the training apparatus for a temperature measurement model, the temperature measurement device, or the temperature measurement system constitutes no limitation on a device or a functional module. During actual implementation, the device or the functional module may appear with another name. Each device or functional module falls within the scope defined by the claims and their equivalent technologies in this application, provided that a function of the device or functional module is similar to that described in this application.

These aspects or other aspects in this application are more concise and comprehensible in the following descriptions.

## BRIEF DESCRIPTION OF DRAWINGS

FIG. 1 is a schematic diagram of a hardware structure of a computing device according to an embodiment of this application;

FIG. 2 is a schematic architectural diagram of a temperature measurement system according to an embodiment of this application;

FIG. 3 is a schematic diagram of a hardware structure of a mobile phone according to an embodiment of this application;

FIG. 4 is a schematic flowchart of a training method for a general temperature measurement model according to an embodiment of this application;

FIG. 5 is a schematic diagram of different locations in a field of view of a camera according to an embodiment of this application;

FIG. 6 is a schematic diagram of a preset plane at a preset distance from a camera according to an embodiment of this application;

FIG. 7 is a schematic diagram of a first initial infrared image according to an embodiment of this application;

FIG. 8 is a schematic diagram of a structure of a first subnetwork according to an embodiment of this application;

FIG. 9 is a schematic diagram of a structure of a neural network according to an embodiment of this application;

FIG. 10 is a schematic diagram of a structure of another neural network according to an embodiment of this application;

FIG. 11 is a schematic flowchart of a training method for a dedicated temperature measurement model according to an embodiment of this application;

FIG. 12 is a schematic flowchart of a temperature measurement method according to an embodiment of this application;

FIG. 13 is a schematic diagram of a mobile phone-based temperature measurement procedure according to an embodiment of this application;

FIG. 14 is a schematic diagram of displaying a temperature measurement result according to an embodiment of this application;

FIG. 15 is a schematic diagram of a structure of a temperature measurement apparatus according to an embodiment of this application;

FIG. 16 is a schematic diagram of a structure of a chip system according to an embodiment of this application; and

FIG. 17 is a schematic diagram of a structure of a computer program product according to an embodiment of this application.

## DESCRIPTION OF EMBODIMENTS

To better understand embodiments of this application, the following describes some terms or technologies used in embodiments of this application.

(1) Black body

The black body (black body) is an idealized object. The black body can absorb all external electromagnetic radiation, and there is no reflection or transmission. That is, the black body has an absorption coefficient of 1 and a transmission coefficient of 0 for electromagnetic waves of any wavelength.

Therefore, the black body is usually used as a standard object for thermal radiation research. The black body can completely absorb all external electromagnetic radiation, and there is no reflection or transmission.

In embodiments of this application, the black body may be considered as a temperature generator. For example, electromagnetic radiation radiating the black body is adjusted, so that the black body generates a corresponding temperature. It may be understood that any temperature generated by the black body is constant.

(2) Other terms

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner.

In embodiments of this application, the terms "first" and "second" are merely used for a purpose of description, and cannot be understood as an indication or implication of relative importance or an implicit indication of a quantity of indicated technical features. Therefore, a feature limited by "first" or "second" may explicitly or implicitly include one or more features. In the descriptions of this application, unless otherwise stated, "a plurality of" means two or more.

In this application, the term "at least one" means one or more, and the term "a plurality of" means two or more. For example, "a plurality of second packets" means two or more second packets. The terms "system" and "network" usually may be interchangeably used in this specification.

It should be understood that the terms used in the descriptions of various examples in this specification are merely intended to describe specific examples, but are not intended to constitute a limitation. The terms "one" (" a" or "an") and "the" of singular forms used in the descriptions of various examples and the appended claims are also intended to include plural forms, unless otherwise specified in the context clearly.

It should be further understood that the term "and/or" used in this specification indicates and includes any or all possible combinations of one or more of listed associated items. The term "and/or" describes an association relationship between associated objects, and represents that three relationships may exist. For example, A and/or B may represent the following three cases: Only A exists, both A and B exist, and only B exists. In addition, the character "/" in this application usually indicates an "or" relationship between associated objects.

It should be further understood that in embodiments of this application, sequence numbers of processes do not mean execution sequences. The execution sequences of the processes should be determined based on functions and internal logic of the processes, and should not be construed as any limitation on the implementation processes of embodiments of this application.

It should be understood that determining B based on A does not mean that B is determined based on only A, and B may alternatively be determined based on A and/or other information.

It should be further understood that the term "include" (which is also referred to as "includes", "including", "comprises", and/or "comprising"), when being used in this specification, specifies the presence of stated features, integers, steps, operations, elements, and/or components, but does not preclude the presence or addition of one or more other features, integers, steps, operations, elements, components, and/or groups thereof.

It should be further understood that the term "if" may be interpreted as a meaning of "when" ("when" or "upon"), "in response to determining", or "in response to detecting". Similarly, according to the context, the phrase "if it is determined that" or "if (a stated condition or event) is detected" may be interpreted as a meaning of "when it is determined that", "in response to determining", "when (a stated condition or event) is detected", or "in response to detecting (a stated condition or event)".

It should be understood that "one embodiment", "an embodiment", and "a possible implementation" used throughout this specification mean that particular features, structures, or characteristics related to the embodiment or the implementation are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

An embodiment of this application provides a temperature measurement method. In the method, a target temperature of a to-be-measured region in an infrared image (namely, an image obtained through thermal imaging) of a to-be-measured target is determined by using a temperature measurement model obtained through training based on infrared images of a black body for which different preset temperatures are set and an infrared image of a preset region, to implement temperature measurement in the to-be-measured region. Temperature measurement precision achieved when the to-be-measured temperature is measured by using the method is greater than that achieved when temperature measurement is performed by using an existing thermal imaging infrared temperature measurement system.

The preset region is a region in which a temperature needs to be measured in an infrared image obtained by photographing a preset object. The to-be-measured region is a region in which a temperature needs to be measured in the infrared image of the to-be-measured target. Type attributes of the preset object and the to-be-measured target are the same. For example, the type attribute may be a person, that is, both the preset object and the to-be-measured target are persons.

When the preset object or the to-be-measured target is a human body, the region in which a temperature needs to be measured may be a part region such as a forehead region or a wrist region of a person. This is not limited.

Object attributes of the preset region and the to-be-measured region may be the same or different.

For example, both the preset region and the to-be-measured region may be forehead regions or wrist regions in infrared images of faces. Alternatively, the object attribute of the preset region may be a wrist region of a person, and the object attribute of the to-be-measured region may be a forehead region of a person. This is not limited.

An embodiment of this application further provides a training apparatus. The training apparatus may be configured to obtain the foregoing temperature measurement model through training in advance based on infrared images of a black body for which different preset temperatures are set and a plurality of infrared images of a preset region. Herein, the training apparatus may be any computing device that has a computing capability, and the computing device may be a server or the like. This is not limited thereto.

It should be noted that the infrared image in this embodiment of this application is an original infrared image that is obtained by an infrared camera by photographing a target object and that is generated based on infrared radiation light of the target object. A pixel value of a pixel in the original infrared image corresponds to light intensity of the infrared radiation light used for imaging. The light intensity of the infrared radiation light corresponds to a temperature of the target object. That is, the original infrared image includes temperature information of the target object. It should be understood that the infrared image is not a gray-white image or a pseudo-color image that is visible to human eyes and that is obtained through conversion by using a preset conversion rule.

The temperature measurement model may be a general temperature measurement model or a dedicated temperature measurement model.

The general temperature measurement model may be obtained through training based on infrared images captured by different infrared cameras. In this way, the general temperature measurement model may be used to measure, with high precision, target temperatures of a to-be-measured region photographed by the different infrared cameras.

The dedicated temperature measurement model may be obtained through training based on infrared images captured by a same infrared camera. In this way, the dedicated temperature measurement model may be used to measure, with high precision, a temperature of a to-be-measured region photographed by a preset infrared camera. The preset infrared camera and the infrared camera used to capture a training sample used to train the dedicated temperature measurement model are the same (for example, are cameras of a same model or a same camera).

An embodiment of this application further provides a temperature measurement apparatus. The foregoing temperature measurement model is preset in the temperature measurement apparatus. In this way, the temperature measurement apparatus may perform temperature measurement on an obtained infrared image based on the temperature measurement model.

Specifically, the temperature measurement apparatus may be a terminal device. The terminal device may be a portable device such as a mobile phone, a tablet computer, or a wearable electronic device, may be a computing device such as a personal computer (personal computer, PC), a personal digital assistant (personal digital assistant, PDA), or a netbook, or may be any other terminal device that can implement embodiments of this application. This is not limited in this application. Certainly, the temperature measurement apparatus may alternatively be a server. This is not limited.

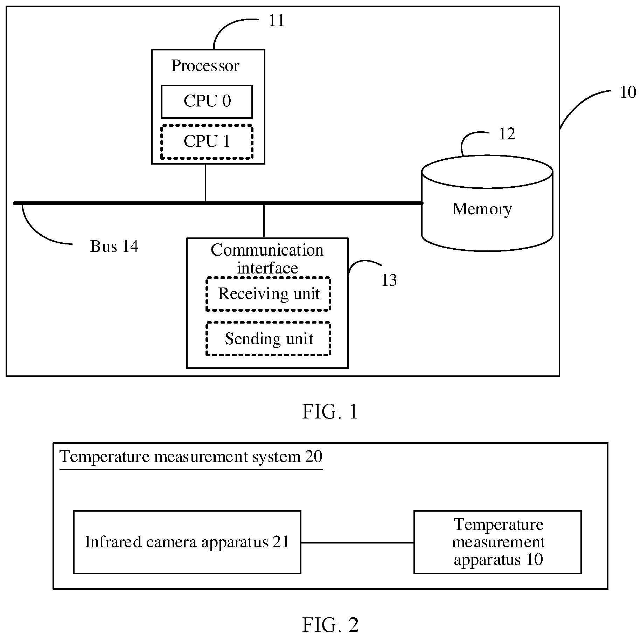

FIG. 1 is a schematic diagram of a hardware structure of a computing device 10 according to an embodiment of this application. The computing device may be the foregoing training apparatus or the foregoing temperature measurement apparatus. This is not limited. As shown in FIG. 1, the computing device 10 includes a processor 11, a memory 12, a communication interface 13, and a bus 14. The processor 11, the memory 12, and the communication interface 13 may be connected by using the bus 14.

The processor 11 is a control center of the computing device 10, and may be a general-purpose central processing unit (central processing unit, CPU), another general-purpose processor, or the like. The general-purpose processor may be a microprocessor, any conventional processor, or the like.

In an example, the processor 11 may include one or more CPUs, for example, a CPU 0 and a CPU 1 shown in FIG. 1.

The memory 12 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a magnetic disk storage medium or another magnetic storage device, or any other medium that can carry or store expected program code in a form of an instruction or data structure and that can be accessed by a computer. However, this is not limited thereto.

In a possible implementation, the memory 12 may be independent of the processor 11. The memory 12 may be connected to the processor 11 by using the bus 14, and is configured to store data, instructions, or program code. When invoking and executing the instructions or the program code stored in the memory 12, the processor 11 can implement the temperature measurement method provided in embodiments of this application, or implement the training method for a temperature measurement model provided in embodiments of this application.

In another possible implementation, the memory 12 may alternatively be integrated with the processor 11.

The communication interface 13 is configured to connect the computing device 10 to another device (for example, a device configured to capture an infrared image of a to-be-measured target) through a communication network. The communication network may be Ethernet, a radio access network (radio access network, RAN), a wireless local area network (wireless local area network, WLAN), or the like. The communication interface 13 may include a receiving unit configured to receive data and a sending unit configured to send data.

The bus 14 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used for representation in FIG. 1, but it does not represent that there is only one bus or one type of bus.

It should be noted that the structure shown in FIG. 1 does not constitute a limitation on the computing device 10. In addition to the components shown in FIG. 1, the computing device 10 may include more or fewer components than those shown in the figure, combine some components, or have different component arrangements.

Based on this, an embodiment of this application further provides a temperature measurement system. FIG. 2 shows a temperature measurement system 20 according to an embodiment of this application. As shown in FIG. 2, the temperature measurement system 20 includes an infrared camera apparatus 21 and the foregoing computing device 10.

The infrared camera apparatus 21 may be an infrared camera, and is configured to capture an infrared image of a to-be-measured target.

The computing device 10 may obtain, by using a communication interface 13 of the computing device 10 or by using a cable, the infrared image of the to-be-measured target that is captured by the infrared camera apparatus 21, and determine a target temperature of a to-be-measured region in the infrared image of the to-be-measured target by performing the temperature measurement method provided in embodiments of this application.

In addition, an embodiment of this application further provides a temperature measurement device. The temperature measurement device may be a terminal device including an infrared imaging apparatus. For example, the infrared imaging apparatus may be an infrared camera or an infrared detector, and the terminal device may be a mobile phone, a tablet computer, a notebook computer, a camera, an access control device, or a handheld thermometer in which the infrared imaging apparatus is configured. This is not specifically limited. The infrared imaging apparatus may be configured to capture an infrared image of a to-be-measured target.

The foregoing temperature measurement model is preset in the temperature measurement device. For example, the temperature measurement model may be preset in the temperature measurement device as a functional module of an application in the temperature measurement device. Alternatively, the temperature measurement model may be preset in firmware of the infrared imaging apparatus (for example, an infrared camera) in the temperature measurement device. Alternatively, the temperature measurement model may be preset in a chip of the temperature measurement device. This is not limited in this embodiment of this application.

For brief description, in the following embodiments of this application, an example in which the infrared imaging apparatus is an infrared camera is used for description.

It should be understood that the temperature measurement device may update the temperature measurement model by updating a version of the application, the firmware of the camera, or the chip.

The application may be an embedded application (namely, a system application of the terminal device) installed in the terminal device, or may be a downloadable application.

The embedded application is an application provided by an operating system of the device (for example, a mobile phone). For example, the embedded application may be a camera application (application, App) provided before the mobile phone is delivered.

The downloadable application is an application that can provide a communication connection of the downloadable application. The downloadable application is an app that can be pre-installed in the device, or may be a third-party app that is downloaded and installed by a user in the device. For example, the downloadable application may be a temperature measurement app or a health app that includes a temperature measurement function module.

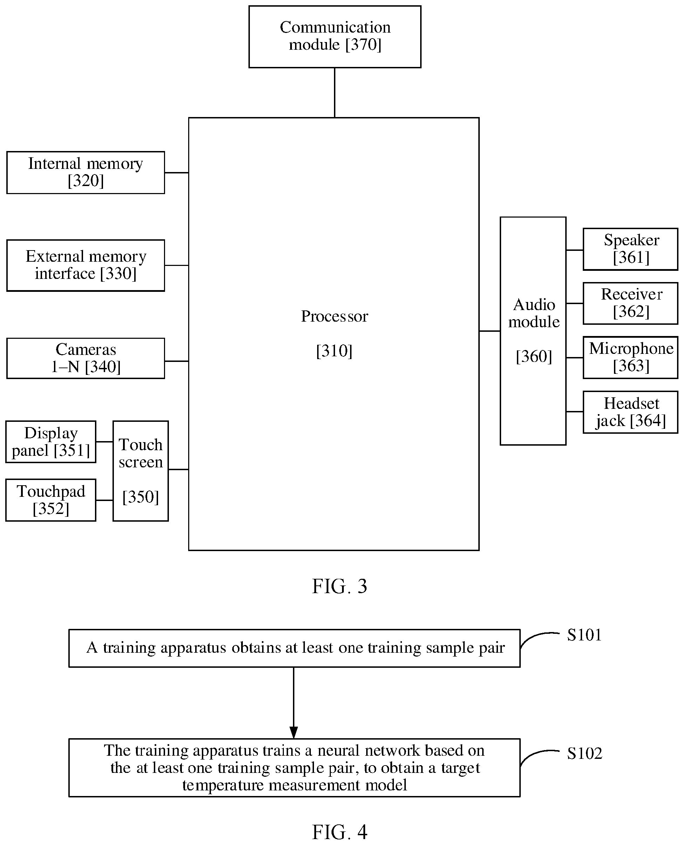

Refer to FIG. 3. An example in which the temperature measurement device is a mobile phone is used. FIG. 3 shows a hardware structure of a mobile phone 30. As shown in FIG. 3, the mobile phone 30 may include a processor 310, an internal memory 320, an external memory interface 330, a camera 340, a touchscreen 350, an audio module 360, a communication module 370, and the like.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 30. The controller may generate an operation control signal based on instruction operation code and a timing signal, to complete control of instruction fetching and instruction execution.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the mobile phone 30 may be implemented by using the NPU, for example, image recognition, facial recognition, and temperature measurement of an infrared image.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). The I2S interface may be configured to perform audio communication. The PCM interface may also be configured to perform audio communication, and sample, quantize, and encode an analog signal. The UART interface is a universal serial data bus, and is configured to perform asynchronous communication. The bus may be a two-way communication bus. The bus converts to-be-transmitted data between serial communication and parallel communication. The MIPI interface may be configured to connect the processor 310 to a peripheral component such as the camera 340 or the touchscreen 350. The MIPI interface includes a camera serial interface (camera serial interface, CSI), a display serial interface (display serial interface, DSI), and the like. The GPIO interface may be configured by using software. The GPIO interface may be configured as a control signal or a data signal.

The internal memory 320 may be configured to store computer-executable program code. The executable program code includes instructions. The processor 310 runs the instructions stored in the internal memory 320, to perform various function applications and data processing of the mobile phone 30, for example, perform the temperature measurement method provided in embodiments of this application.

The external memory interface 330 may be configured to be connected to an external memory card, for example, a micro SD card, to extend a storage capability of the mobile phone 30. The external memory card communicates with the processor 310 through the external memory interface 330, to implement a data storage function. For example, files such as music, a video, and a picture are stored in the external memory card.

The camera 340 is configured to capture a static image or a video. An optical image of an object is generated through a lens, and is projected onto a photosensitive element. The digital signal processor is configured to process a digital signal, and may process another digital signal in addition to the digital image signal.

It should be understood that the mobile phone 30 may include n cameras 340, and the n cameras 340 include at least one infrared camera. The infrared camera is configured to capture an infrared image of a to-be-measured target, that is, perform thermal imaging on the to-be-measured target. In this way, based on the infrared image of the to-be-measured target, the processor 310 of the mobile phone 30 may execute the executable program code stored in the internal memory 320 to perform the temperature measurement method provided in embodiments of this application, so as to determine a target temperature of a to-be-measured region in the infrared image of the to-be-measured target, and output the target temperature to a user through the touchscreen 350 or the audio module 360.

The touchscreen 350 is used for interaction between the mobile phone 30 and the user. The touchscreen 350 includes a display panel 351 and a touchpad 352. The display panel 351 is configured to display text, an image, a video, and the like. The touchpad 352 is configured to input an instruction from the user

The audio module 360 is configured to convert digital audio information into an analog audio signal for output, and is further configured to convert an analog audio input into a digital audio signal. A speaker 361, also referred to as a "horn", is configured to convert an audio electrical signal into a sound signal. A receiver 362, also referred to as an "earpiece", is configured to convert an electrical audio signal into a sound signal. A microphone 363, also referred to as a "mike" or a "mic", is configured to convert a sound signal into an electrical signal. A headset jack 364 is configured to be connected to a wired headset. The headset jack 364 may be a USB port, or may be a 3.2 mm open mobile terminal platform (open mobile terminal platform, OMTP) standard interface or cellular telecommunications industry association of the USA (cellular telecommunications industry association of the USA, CTIA) standard interface.

In this way, the mobile phone 30 may implement an audio function, for example, voice input of the user and voice/music playing, by using the speaker 361, the receiver 362, the microphone 363, and the headset jack 364 in the audio module 360, the application processor, and the like.

The communication module 370 is configured to implement a communication function of the mobile phone 30. Specifically, the communication module 370 may be implemented by using an antenna, a mobile communication module, a wireless communication module, a modem processor, a baseband processor, and the like.

The antenna is configured to transmit and receive an electromagnetic wave signal. Each antenna in the mobile phone 30 may be configured to cover one or more communication bands. Different antennas may be further multiplexed, to improve antenna utilization. For example, an antenna 1 used for the mobile communication module may be multiplexed as a diversity antenna of a wireless local area network. In some other embodiments, the antenna may be used in combination with a tuning switch.

The mobile communication module may provide a wireless communication solution that is applied to the mobile phone 30 and that includes 2G/3G/4G/5G or the like. The mobile communication module may include at least one filter, a switch, a power amplifier, a low noise amplifier (low noise amplifier, LNA), and the like. The mobile communication module 350 may receive an electromagnetic wave through the antenna, perform processing such as filtering and amplification on the received electromagnetic wave, and transmit a processed electromagnetic wave the modem processor for demodulation. The mobile communication module may further amplify a signal obtained after modulation by the modem processor, and convert the signal into an electromagnetic wave through the antenna for radiation. In some embodiments, at least some functional modules in the mobile communication module may be disposed in the processor 310. In some embodiments, at least some functional modules in the mobile communication module may be disposed in a same component as at least some modules in the processor 310. The modem processor may include a modulator and a demodulator.

The wireless communication module may provide a wireless communication solution that is applied to the mobile phone 30 and that includes a wireless local area network (wireless local area network, WLAN) (for example, a wireless fidelity (wireless fidelity, Wi-Fi) network), Bluetooth (Bluetooth, BT), a GNSS, frequency modulation (frequency modulation, FM), near field communication (near field communication, NFC), infrared (infrared, IR), or the like. The wireless communication module may be one or more components into which at least one communication processing module is integrated. The wireless communication module receives an electromagnetic wave through the antenna, performs frequency modulation and filtering processing on an electromagnetic wave signal, and sends a processed signal to the processor 310. The wireless communication module may further receive a to-be-sent signal from the processor 310, perform frequency modulation and amplification on the signal, and convert the signal into an electromagnetic wave through the antenna for radiation.

For example, the GNSS in this embodiment of this application may include a GPS, a GLONASS, a BDS, a QZSS, an SBAS, and/or a GALILEO.

It may be understood that the structure shown in this embodiment of this application does not constitute a specific limitation on the mobile phone 30. In some other embodiments of this application, the mobile phone 30 may include more or fewer components than those shown in the figure, combine some components, split some components, or have different component arrangements. The components shown in the figure may be implemented by hardware, software, or a combination of software and hardware.

The method provided in embodiments of this application is described below with reference to the accompanying drawings.

A training method for a temperature measurement model used in the temperature measurement method provided in embodiments of this application is first described.

FIG. 4 is a schematic flowchart of a training method for a general temperature measurement model according to an embodiment of this application. The method may be performed by a training apparatus (for example, the training apparatus may be the computing device 10 shown in FIG. 1). The method may include the following several steps.

S101: The training apparatus obtains at least one training sample pair.

S102: The training apparatus trains a neural network based on the at least one training sample pair, to obtain a target temperature measurement model.

The target temperature measurement model is a general temperature measurement model, that is, the target temperature measurement model may measure, with high precision, target temperatures of a to-be-measured region photographed by different infrared cameras.

Step S101 and step S102 are described in detail below.

In S101, a first training sample pair in the at least one training sample pair includes a first image and a second image. The first training sample pair is any one of the at least one training sample pair. The first image is an infrared image of a black body for which a preset temperature is set, the first image includes a temperature label, and the temperature label indicates the preset temperature. The second image is an infrared image of a preset region.

The preset temperature may be any temperature within a preset temperature range. A value of the preset temperature range is not specifically limited in this embodiment of this application.

For example, in actual application, if the temperature measurement method provided in embodiments of this application is used to measure a body temperature of a human body, the preset temperature range may be from 35°C to 42°C.

It should be understood that the preset temperature is used to determine a loss function in a process of training the temperature measurement model, so that the temperature measurement model converges during iterative training.

It should be understood that a converged temperature measurement model is the target temperature measurement model. For detailed descriptions of determining the loss function based on the preset temperature, refer to the following descriptions of determining a first loss function. Details are not described herein.

It should be understood that any one of the at least one training sample pair includes an infrared image of the black body and an infrared image of the preset region. In this embodiment of this application, an infrared image of the black body in the at least one training sample pair is referred to as a first-type image, and an infrared image of the preset region in the at least one training sample pair is referred to as a second-type image. It should be understood that the first image is an image in the first-type image, and the second image is an image in the second-type image.

A quantity of first-type images may be the same as or different from a quantity of second-type images. This is not limited in this embodiment of this application. It should be understood that any infrared image in the first-type image and any infrared image in the second-type image may form a training sample pair.

In this way, for the first image in the first-type image, a temperature (namely, a first temperature set for the black body) of the black body in the first image may be labeled by using the temperature label in the first image.

For example, if the temperature of the black body photographed in the first image is set to a temperature 1, the temperature label, in the first image, indicating the temperature set for the black body may be represented by "temperature 1". A specific implementation of the temperature label is not limited in this embodiment of this application.

Infrared images in the first-type image are infrared images of the black body that is located at different locations in a field of view of an infrared camera (which is briefly referred to as a camera below) and for which different preset temperatures or a same preset temperature are or is set.

Herein, the different locations in the field of view of the camera include any locations in a field of view region of the camera on a preset plane. The preset plane may be any plane that is at a preset distance from the camera and that is perpendicular to an optical axis of a lens of the camera, and the field of view region is a field of view region of the camera on the preset plane. A value of the preset distance is not specifically limited in this embodiment of this application.

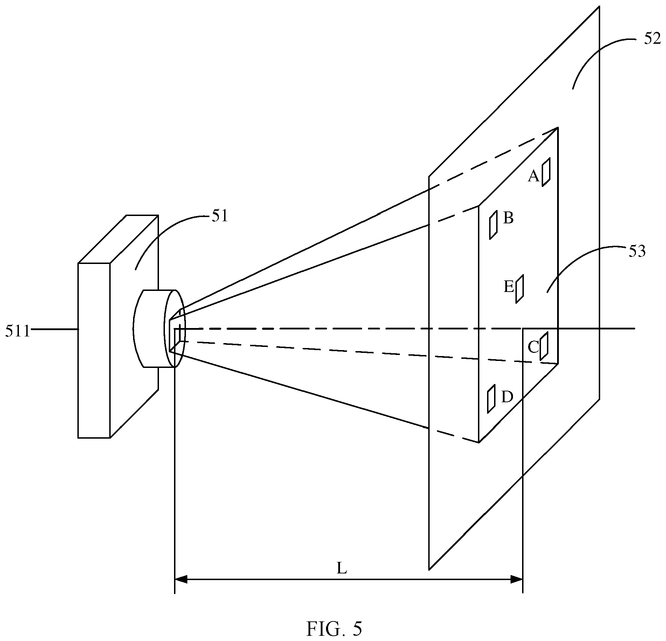

For example, FIG. 5 is a schematic diagram of different locations in a field of view of a camera 51. As shown in FIG. 5, a field of view region of the camera 51 on a preset plane 52 is a field of view region 53. The field of view region 53 includes different locations such as a location A, a location B, a location C, a location D, and a location E. The preset plane 52 is a plane perpendicular to an optical axis 511 of a lens of the camera 51, and a distance between the preset plane 52 and the camera 51 is L.

In this way, the image in the first-type image may be an infrared image of the black body that is located at the location A and for which a preset temperature 1 is set, an infrared image of the black body that is located at the location B and for which a preset temperature 2 is set, an infrared image of the black body that is located at the location C and for which a preset temperature 3 is set, an infrared image of the black body that is located at the location D and for which a preset temperature 4 is set, or an infrared image of the black body that is located at the location E and for which a preset temperature 5 is set. The preset temperature 1, the preset temperature 2, the preset temperature 3, the preset temperature 4, and the preset temperature 5 may be the same or different. This is not limited.

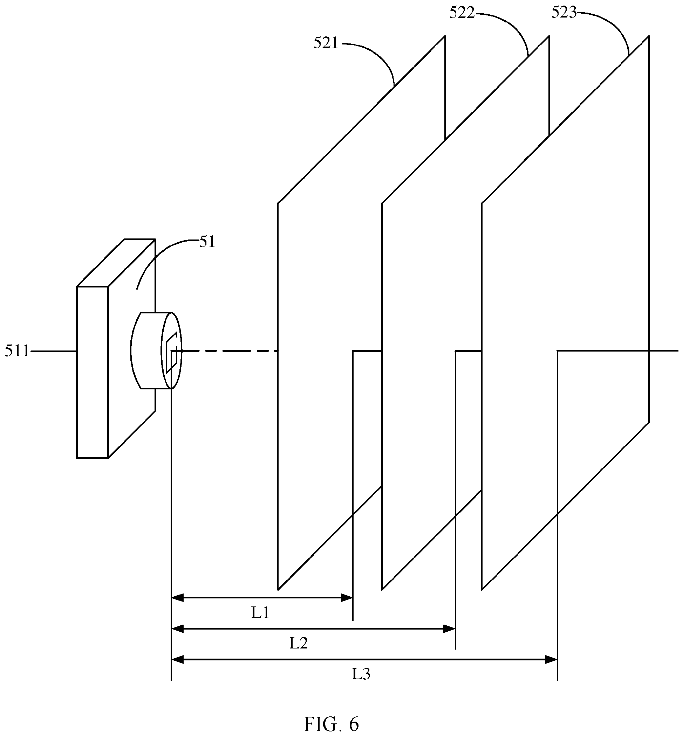

FIG. 6 is a schematic diagram of a preset plane at a preset distance from the camera 51. As shown in FIG. 6, the optical axis of the lens of the camera 51 is the optical axis 511. In this case, a plane that is at a preset distance L1 from the camera 51 and that is perpendicular to the optical axis 511 is a preset plane 521; a plane that is at a preset distance L2 from the camera 51 and that is perpendicular to the optical axis 511 is a preset plane 522; and a plane that is at a preset distance L3 from the camera 51 and that is perpendicular to the optical axis 511 is a preset plane 523. Values of the preset distances L1, L2, and L3 are not specifically limited in this embodiment of this application.

In actual application, when the camera used to capture the infrared image of the black body is a small infrared camera, due to environmental noise caused by long-distance photographing, the preset distance may be any distance within a range of 0.5 m to 1 m from the camera.

It should be understood that the preset plane 52 in FIG. 5 may be the preset plane 521 in FIG. 6, may be the preset plane 522 in FIG. 6, or certainly may be the preset plane 523 in FIG. 6. This is not limited.

In this way, the images in the first-type image include infrared images of the black body that is located at any locations in a field of view region of the camera on each preset plane and for which different preset temperatures or a same preset temperature are or is set.

That is, the first image in the first-type image may be an infrared image of the black body that is located at a first location in a field of view of the camera and for which a first temperature is set. Herein, the first location may be any location in a field of view region of the camera on any preset plane, and the first temperature is any temperature within the preset temperature range. This is not limited.

It may be learned that the black body has different imaging locations in the infrared images of the black body in the training sample pair. In this way, when infrared images including the black body at different imaging locations are used to train the temperature measurement model, impact of the different imaging locations of the black body on temperature measurement precision can be reduced.

Further, in this embodiment of this application, infrared images obtained after the camera photographs the black body that is located at different locations in the field of view of the camera and for which different preset temperatures or a same preset temperature are or is set are referred to as first initial infrared images. In this case, the infrared image in the first-type image may be an infrared image of a region in which the black body is located in the first initial infrared image.

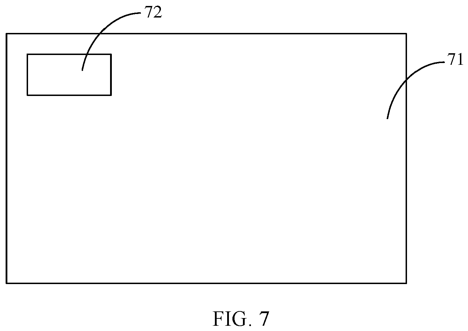

For example, FIG. 7 is a schematic diagram of a first initial infrared image 71. As shown in FIG. 7, the first initial infrared image 71 is a first initial infrared image obtained by photographing, by the camera, the black body that is located at the first location in the field of view of the camera and for which the first temperature is set. In the first initial infrared image 71, an imaging location of the black body is in a region 72. That is, a region in which the black body is located in the first initial infrared image 71 is the region 72. In this case, an infrared image of the region 72 in the first initial infrared image 71 is an infrared image in the first-type image.

It should be understood that the imaging location and an imaging size of the black body in the first initial infrared image captured by the camera vary with the location of the black body in the field of view region of the camera. For example, an imaging size of the black body existing when the camera photographs the black body that is located on a preset plane at a relatively short preset distance from the camera is greater than an imaging size of the black body existing when the camera photographs the black body that is located on a preset plane at a relatively long preset distance from the camera.

In this case, when the neural network is trained, it is usually required that sizes of training sample images input to the neural network are the same. Therefore, after the image of the region in which the black body is located is recognized and extracted from the first initial infrared image, the image further needs to be proportionally reduced/enlarged to an image having a preset size. In this way, the image that has the preset size, that is obtained through reduction/enlargement, and that is of the region in which the black body is located is a first-type image.

It should be understood that a process of recognizing and extracting the image of the region in which the black body is located from the first initial infrared image and a process of reducing/enlarging the image may be performed by any device having an image processing function, or may be performed by the training apparatus in this embodiment of this application. This is not limited.

Optionally, the first initial infrared images used to obtain the first-type image may be infrared images of the black body that are captured by using different cameras.

The different cameras may be infrared cameras of different types/models, or may be infrared cameras that are of different identity numbers (identity document, ID) and a same model. This is not limited.

In this case, the infrared image in the first-type image further includes a camera label (namely, a camera apparatus label in embodiments of this application), and the camera label indicates a camera used to capture the infrared image. Herein, in an example, the camera label may be represented by using an ID of the camera.

For example, if the first image in the first-type image is determined based on a first initial infrared image captured by a camera 1, a camera label in the first image may be represented by using an ID 1 of the camera 1.

How the camera captures the first initial infrared image used to obtain the first-type image is described below by using a specific sampling instance.

Specifically, an example in which different infrared cameras (of different models or different IDs) are used to photograph the black body to obtain the first initial infrared image is used. For a first camera in the different infrared cameras, in a process of photographing the black body by the first camera, a temperature of the black body may be adjusted by using a preset interval temperature (for example, 0.05°C) within the preset temperature range (for example, 35°C to 42°C). Then, the first camera may capture infrared images of the black body for which different preset temperatures are set.

Further, when the first camera photographs the black body for which the temperature 1 (namely, any temperature within the preset temperature range) is set, the black body may be moved in a field of view region on a preset plane that is at a preset distance from the camera, so that the first camera may capture infrared images of the black body that is located at different locations in the field of view region and for which a preset temperature is the temperature 1.

Then, the black body is moved in a direction of an optical axis of a lens of the first camera, to adjust the preset distance, so as to move the preset plane. In this way, the first camera may capture infrared images of the black body that is located at different locations in a field of view of the first camera and for which the preset temperature is the temperature 1. A unit distance for moving the black body may range from 5 cm to 10 cm. A value of the unit distance for moving the black body is not limited in this embodiment of this application.

Optionally, for the black body that is located at a location 1 (namely, any location in the field of view) in the field of view of the first camera and for which the preset temperature is the temperature 1, the first camera may capture one or two infrared images of the black body, in other words, capture one or two first initial infrared images.

Optionally, for the black body that is located at the location 1 in the field of view of the camera and for which the preset temperature is the temperature 1, each of the different cameras may capture one or two infrared images of the black body, in other words, capture one or two first initial infrared images.

The second-type image includes an infrared image of the preset region.

The preset region may be a region in which a temperature needs to be measured. In an example, if the temperature measurement model obtained through training in this embodiment of this application is used to measure a body temperature of a person, the preset region herein may be a region in which a part such as a forehead or a wrist of the person is located.

In this way, the infrared image of the preset region may be obtained by performing photographing by using the camera. Alternatively, a second initial infrared image including the preset region is captured by using the camera, and an image of the preset region is recognized and extracted from the second initial infrared image, to obtain the second-type image. Herein, in this embodiment of this application, a process of recognizing and extracting the image of the preset region from the second initial infrared image is not described.

It should be understood that a size of the image in the second-type image is the same as a size of the image in the first-type image, that is, the image in the second-type image is an image having the preset size. Therefore, when a size of the image of the preset region that is recognized and extracted from the second initial infrared image is not the preset size, the extracted image of the preset region may be proportionally reduced/enlarged, to obtain a second-type image having the preset size.

It should be understood that a process of recognizing and extracting the image of the preset region from the second initial infrared image and a process of reducing/enlarging the extracted image of the preset region may be performed by any device having an image processing function, or may be performed by the training apparatus in this embodiment of this application. This is not limited.

It should be noted that second-type images or second initial infrared images used to obtain the second-type image may be captured by using a same camera, or may be captured by using different cameras (for example, of different models or IDs). This is not limited.

When the second-type images or the second initial infrared images used to obtain the second-type image are captured by using different cameras (for example, of different models or different IDs), the image in the second-type image includes a camera label, and the camera label indicates a camera used to capture the second image. Herein, in an example, the camera label may be represented by using an ID of the camera.

It should be noted that if the image in the first-type image includes a camera label, the image in the second-type image may include a camera label, or may not include a camera label; or if the image in the second-type image includes a camera label, the image in the first-type image may include a camera label, or may not include a camera label. This is not limited.

For ease of description, in this embodiment of this application, an example in which the image in the first-type image includes a camera label, and the image in the second-type image does not include a camera label is used below for description.

In S102, it may be learned from the foregoing description that the at least one training sample pair includes the first-type image and the second-type image. Data of the first-type image input to the neural network may be expressed by $D_s = \left\{ \left( x_i, y_i \right) \right\}_{i=1}^{n}$. Herein, $D_s$ represents the data of the first-type image, $x_i$ represents image data of an $i^{th}$ image in the first-type image, $y_i$ represents label data of the $i^{th}$ image, and n represents that the first-type image includes a total of n images. Both i and n are positive integers, and $i \le n$.

Similarly, data of the second-type image input to the neural network may be expressed by $D_t = \left\{ \left( x_j \right) \right\}_{j=1}^{m}$. Herein, $D_t$ represents the data of the second-type image, $x_j$ represents image data of a $j^{th}$ image in the second-type image, and m represents that the second-type image includes a total of m images. Both j and m are positive integers, and $j \le m$. Herein, m may be equal to n, or may not be equal to n.

Optionally, the training apparatus may first perform standardization processing on the image in the at least one training sample pair, so that an operation performed by the neural network based on the training sample can be simplified. The standardization processing may include reducing a value range of a pixel in the image.

For example, a value range of a pixel in an RGB image is usually from 0 to 255. After the standardization processing in this embodiment of this application is performed, the value range may be reduced to, for example, a range from 0 to 1.5. In this way, the neural network performs a relatively simple operation based on training sample data obtained after the standardization processing.

In an example, the first image in the first-type image in the at least one training sample is used. In this case, the training apparatus may first calculate an average value of pixels in the first image based on a formula (1), then calculate a variance of the pixels in the first image based on the average value and a formula (2), and finally determine, based on a formula (3), a first image obtained after standardization processing:

$$X_a = \sum{}_{i=1}^{h} \sum{}_{i=1}^{w} X_i \quad \text{formula (1)}$$

$$\sigma = \sqrt{\frac{\sum_{i}^{N}\left(X_i - X_a\right)}{N}} \quad \text{formula (2)}$$

$$X_{out} = \frac{X - X_a}{\sigma} \quad \text{formula (3)}$$

Herein, $X_a$ represents the average value of the pixels in the first image, $X_i$ represents an $i^{th}$ pixel in the first image, h represents a height of the first image, w represents a width of the first image, $\sigma$ represents the variance of the pixels in the first image, and $X_{out}$ represents the first image obtained after the standardization processing.

Then, the training apparatus inputs at least one training sample pair obtained after the standardization processing to the neural network, to train the neural network.

Specifically, for the neural network used as an initial temperature measurement model, the training apparatus inputs the first training sample pair in the at least one training sample pair to the neural network, and determines a first target loss function based on an operation result of the neural network for the first training sample pair and labels (including the temperature label and the camera label) in the first training sample pair. Then, the training apparatus adjusts a network parameter of the neural network based on the first target loss function, to obtain a second temperature measurement model.

Then, the training apparatus inputs a second training sample pair in the at least one training sample pair to the second temperature measurement model, and determines a second target loss function based on an operation result of the second temperature measurement model for the second training sample pair and labels (including a temperature label and a camera label) in the second training sample pair. Then, the training apparatus adjusts a network parameter of the second temperature measurement model based on the second target loss function, to obtain a third temperature measurement model.

Similarly, the training apparatus performs iterative training on the neural network by using the at least one training sample pair, to obtain the general target temperature measurement model. The training apparatus usually may determine, based on whether a quantity of times of iterative training exceeds a first preset threshold or based on whether a value of the target loss function is less than a second preset threshold, whether training of the target temperature measurement model is completed. Values of the first preset threshold and the second preset threshold are not specifically limited in this embodiment of this application.

For example, when the quantity of times of iterative training exceeds the first preset threshold, the training apparatus determines that the network has converged, that is, training of the temperature measurement model is completed. For another example, if the value of the target loss function of the temperature measurement model is less than the second preset threshold, the training apparatus determines that the network has converged, that is, training of the temperature measurement model is completed.

Optionally, the neural network used as the initial temperature measurement model may be a neural network pre-designed by a developer. This is not limited.

It should be understood that a same process is performed by the neural network to determine a target loss function corresponding to any one of the at least one training sample pair based on an operation result for the any training sample pair and labels (including a temperature label and a camera label) in the any training sample pair.

The process in which the neural network determines the target function is described below by using an example in which the neural network determines the first target loss function based on the operation result for the first training sample pair and the labels (including the temperature label and the camera label) in the first training sample pair.

In a possible implementation, the neural network may include a first subnetwork and a second subnetwork, and network parameters of the first subnetwork and the second subnetwork are the same. In this case, the training apparatus may input the first image in the first training sample pair to the first subnetwork, and input the second image in the first training sample pair to the second subnetwork. Then, the training apparatus determines the first target loss function based on an operation result of the first subnetwork for the first image, an operation result of the second subnetwork for the second image, and the labels (including the temperature label and the camera label) in the first training sample pair.

In another possible implementation, the training apparatus may first input the first image in the first training sample pair to the neural network, then input the second image in the first training sample pair to the neural network, and then determine the first target loss function based on operation results of the neural network for the first image and the second image and the labels (including the temperature label and the camera label) in the first training sample pair.

For ease of description, in this embodiment of this application, the process of determining the first target loss function is described below by using an example in which the neural network includes the first subnetwork and the second subnetwork.

The first subnetwork may include at least one feature extraction layer, and each of the at least one feature extraction layer includes a convolutional layer and an activation function layer. A quantity of the at least one feature extraction layer is not specifically limited in this embodiment of this application. The convolutional layer in the first subnetwork may be a single-channel two-dimensional (2D) convolutional layer, and an activation function at the activation function layer may be a linear activation function or a nonlinear activation function. This is not limited.

Optionally, the at least one feature extraction layer further includes a pooling layer. The pooling layer may perform pooling in a maximum pooling manner, or may perform pooling in a mean pooling manner. This is not limited.

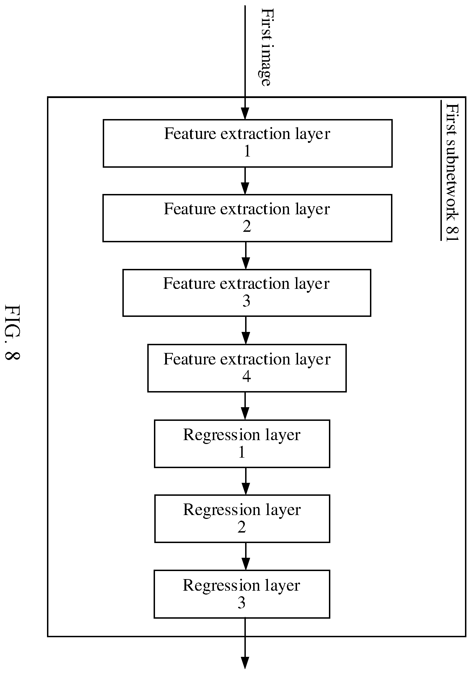

In an example, FIG. 8 is a schematic diagram of a structure of a first subnetwork. As shown in FIG. 8, the first subnetwork 81 includes four feature extraction layers: a feature extraction layer 1, a feature extraction layer 2, a feature extraction layer 3, and a feature extraction layer 4. Each of the feature extraction layer 1 and the feature extraction layer 4 may include a 2D convolutional layer and an activation function layer. Each of the feature extraction layer 2 and the feature extraction layer 3 may include a 2D convolutional layer, an activation function layer, and a pooling layer

As shown in FIG. 8, an input of the feature extraction layer 1 is the first image, an output of the feature extraction layer 1 is an input of the feature extraction layer 2, an output of the feature extraction layer 2 is an input of the feature extraction layer 3, and an output of the feature extraction layer 3 is an input of the feature extraction layer 4.

The four feature extraction layers in FIG. 8 may be represented as follows:

```
ConvNet(
    (conv): Sequential
    (0): Conv2d(1, 32, kemel_size=(3, 3), stride=(1, 1), padding=(1, 1))
    (1): ReLU()
    (2): Conv2d(32, 32, kemel_size=(3, 3), stride=(1, 1), padding=(1, 1))
    (3): ReLU()
    (4): MaxPoo12d(kemel_size=2, stride=2, padding=0, dilation=1, ceil_mode=False)
    (5): Conv2d(32, 64, kemel_size=(3, 3), stride=(1, 1), padding=(1, 1))
    (6): ReLU()
    (7): MaxPool2d(kemel_size=2, stride=2, padding=0, dilation=1, ceil_mode=False)
    (8): Conv2d(64, 128, kemel_size=(3, 3), stride=(1, 1), padding=(1, 1))
    (9): ReLU()
    )
)
```

The row (0) represents convolution parameters of the feature extraction layer 1: There is a single channel, a quantity of layers of an output feature map is 32, a size of a convolution kernel is (3, 3), a convolution stride is (1, 1), and convolution padding is (1, 1). The row (1) represents an activation function invoked by the feature extraction layer 1.

The row (2) represents convolution parameters of the feature extraction layer 2: There are 32 channels, a quantity of layers of an output feature map is 32, a size of a convolution kernel is (3, 3), a convolution stride is (1, 1), and convolution padding is (1, 1). The row (3) represents an activation function invoked by the feature extraction layer 2. The row (4) represents pooling parameters of the feature extraction layer 2: There is a maximum pooling manner, a filter size is 2, a pooling stride is 2, padding is 0, and a dilation rate is 1.

The row (5) represents convolution parameters of the feature extraction layer 3: There are 32 channels, a quantity of layers of an output feature map is 64, a size of a convolution kernel is (3, 3), a convolution stride is (1, 1), and convolution padding is (1, 1). The row (6) represents an activation function invoked by the feature extraction layer 3. The row (7) represents pooling parameters of the feature extraction layer 3: There is a maximum pooling manner, a filter size is 2, a pooling stride is 2, padding is 0, and a dilation rate is 1.

The row (8) represents convolution parameters of the feature extraction layer 4: There are 64 channels, a quantity of layers of an output feature map is 128, a size of a convolution kernel is (3, 3), a convolution stride is (1, 1), and convolution padding is (1, 1). The row (9) represents an activation function invoked by the feature extraction layer 4.

It should be understood that the structure and parameters of the feature extraction layer described in FIG. 8 are merely examples for description, and do not constitute a limitation on the protection scope of embodiments of this application. For example, the first subnetwork 81 may further include more or fewer feature extraction layers. This is not limited in this embodiment of this application. For another example, the size of the convolution kernel at the feature extraction layer may be (4, 4) or (5, 5). This is not limited. Details are not described.

Further, the first subnetwork further includes at least one regression layer, and the at least one regression layer is configured to further process a feature output by a last feature extraction layer (for example, the feature extraction layer 4 shown in FIG. 8) in the first subnetwork, to learn of the temperature of the black body in the first image. Optionally, the at least one regression layer may be further used to learn of camera information used to capture the first image. A quantity of the at least one regression layer is not specifically limited in this embodiment of this application.

Optionally, each of the at least one regression layer may include a fully connected layer, an activation function layer, and a dropout (dropout) layer. An activation function at the activation function layer may be a linear activation function or a nonlinear activation function. This is not limited.

As shown in FIG. 8, the first subnetwork 81 shown in FIG. 8 includes three regression layers: a regression layer 1, a regression layer 2, and a regression layer 3. Each of the regression layer 1, the regression layer 2, and the regression layer 3 includes a fully connected layer, an activation function layer, and a dropout layer.

As shown in FIG. 8, an output of the feature extraction layer 4 is an input of the regression layer 1, an output of the regression layer 1 is an input of the regression layer 2, and an output of the regression layer 2 is an input of the regression layer 3.

The three regression layers in FIG. 8 may be represented as follows:

```
(fc): Sequential(
    (0): Linear(in_features=38400, out_features=2048, bias=True)
    (1): ReLU()
    (2): Dropout(p=0.5, inplace=False)
    (3): Linear(in_features=2048, out_features=2048, bias=True)
    (4): ReLU()
    (5): Dropout(p=0.5, inplace=False)
    (6): Linear(in_features=2048, out_features=1, bias=True)
    (7): ReLU()
    (8): Dropout(p=0.5, inplace=False)
)
```

The row (0) represents full connection parameters of the regression layer 1: There are 38400 input feature maps and 2048 output feature maps. The row (1) represents an activation function invoked by the regression layer 1. The row (2) represents a dropout parameter of the regression layer 1: A dropout probability is 0.5.

The row (3) represents full connection parameters of the regression layer 2: There are 2048 input feature maps and 2048 output feature maps. The row (4) represents an activation function invoked by the regression layer 2. The row (5) represents a dropout parameter of the regression layer 2: A dropout probability is 0.5.

The row (6) represents full connection parameters of the regression layer 3: There are 2048 input feature maps and one output feature map. The row (7) represents an activation function invoked by the regression layer 3. The row (8) represents a dropout parameter of the regression layer 3: A dropout probability is 0.5.

It should be understood that the structure and parameters of the regression layer described in FIG. 8 are merely examples for description, and do not constitute a limitation on the protection scope of embodiments of this application. For example, the first subnetwork 81 may further include more or fewer regression layers. This is not limited in this embodiment of this application.

After the regression layer performs an operation on a feature extracted by the feature extraction layer from the first image, a finally output feature map may include temperature data of the black body, that is, the first subnetwork outputs a measured temperature of the black body in the first image. That is, the first subnetwork learns of the temperature of the black body in the first image from the first image, that is, the first subnetwork measures the temperature of the black body in the first image.

Then, the training apparatus may determine the first loss function based on the measured temperature output by the first subnetwork, the preset temperature indicated by the temperature label in the first image, and an optimization objective in a formula (4):

$$\min_{\theta} \frac{1}{n} \sum_{i=1}^{n} J\left(\theta\left(x_i\right), y_i\right) \quad \text{formula (4)}$$

Herein, $x_i$ represents a measured temperature output after the first subnet performs an operation on an $i$th first-type image, $y_i$ represents a preset temperature indicated by a temperature label in the $i$th first-type image, n represents a quantity of first-type images, $\min_{\theta}$ represents minimizing $\theta$, and $J(\theta)$ is a regression function used to calculate a temperature of the black body in the first-type image.

Herein, in an example, if the temperature that is of the black body in the first image and that is output by the first subnetwork based on the input first image is a measured temperature 1, and the preset temperature indicated by the temperature label in the first image is the preset temperature 1, the training apparatus may determine the first loss function corresponding to the first training sample pair by substituting the measured temperature 1 and the preset temperature 1 into the formula (4).

In this way, operation processing on the first image may be implemented by using the first subnetwork. Similarly, the second subnetwork that has a same structure and parameter as the first subnetwork may implement operation processing on the second image. The structure of the second subnetwork is not described in detail in this embodiment of this application.

Further, the neural network further includes a third subnetwork, and the third subnetwork is used to enable the first image to learn of a feature of the second image, so as to minimize a difference between a feature of the first image and the feature of the second image. In this way, the regression function determined based on the first-type image including the first image may be used to accurately measure a temperature of the preset region in the second-type image including the second image.

Optionally, the third subnetwork includes at least one domain adaptation layer. A quantity of the at least one domain adaptation layer is the same as a quantity of regression layers in the first subnetwork (or a quantity of regression layers in the second subnetwork), and the at least one domain adaptation layer is in a one-to-one correspondence with the regression layer in the first subnetwork (and the regression layer in the second subnetwork).

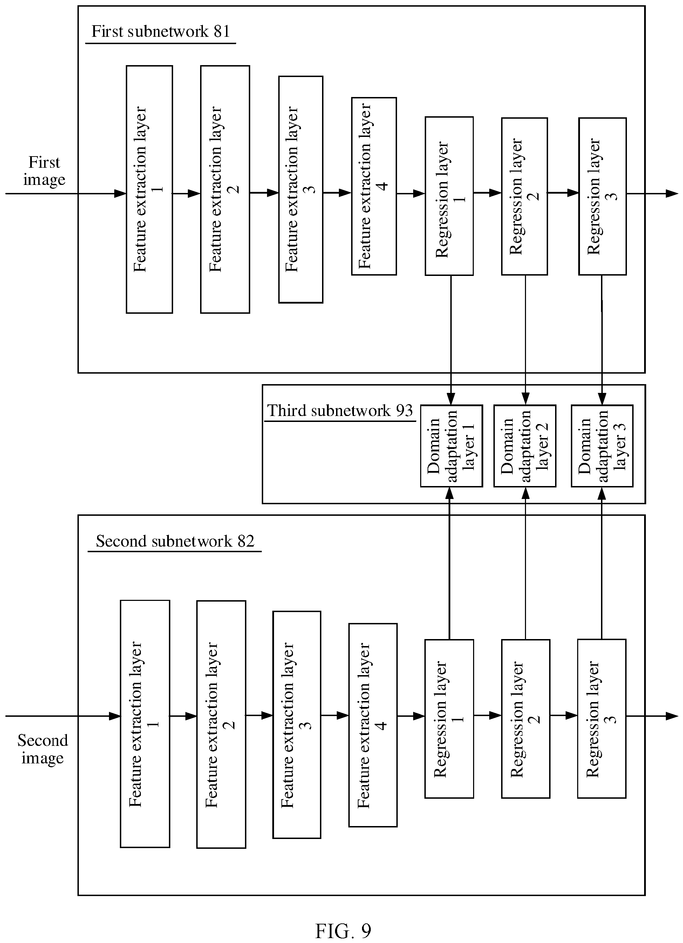

FIG. 9 is a schematic diagram of a structure of a neural network according to an embodiment of this application. As shown in FIG. 9, the neural network includes the first subnetwork 81 shown in FIG. 8, a second subnetwork 82 that has a same structure and parameter as the first subnetwork 81, and a third subnetwork 93. A domain adaptation layer in the third subnetwork 93 is in a one-to-one correspondence with the regression layer in the first subnetwork 81 (and a regression layer in the second subnetwork 82).

As shown in FIG. 9, a domain adaptation layer 1 in the third subnetwork 93 corresponds to the regression layer 1 in the first subnetwork 81 (and a regression layer 1 in the second subnetwork 82), and is configured to determine a difference between a feature 11 and a feature 12 based on the feature 11 output by the regression layer 1 in the first subnetwork 81 and the feature 12 output by the regression layer 1 in the second subnetwork 82;

a domain adaptation layer 2 in the third subnetwork corresponds to the regression layer 2 in the first subnetwork 81 (or a regression layer 2 in the second subnetwork 82), and is configured to determine a difference between a feature 21 and a feature 22 based on the feature 21 output by the regression layer 2 in the first subnetwork 81 and the feature 22 output by the regression layer 2 in the second subnetwork 82; and

a domain adaptation layer 3 in the third subnetwork corresponds to the regression layer 3 in the first subnetwork 81 (or a regression layer 3 in the second subnetwork 82), and is configured to determine a difference between a feature 31 and a feature 32 based on the feature 31 output by the regression layer 3 in the first subnetwork 81 and the feature 32 output by the regression layer 3 in the second subnetwork 82.

It may be learned that for any one of the at least one domain adaptation layer, for example, for a first domain adaptation layer, input data of the first domain adaptation layer is a first feature output by a regression layer, in the first subnetwork, corresponding to the domain adaptation layer and a second feature output by a regression layer, in the second subnetwork, corresponding to the domain adaptation layer.

In this way, the first domain adaptation layer may map the first feature and the second feature to preset space, and determine a first distance between the first feature and the second feature in the preset space. Then, the third subnetwork may determine a second loss function based on the first distance. The first distance is used to represent a difference between the first feature and the second feature.

For example, a process of determining the second loss function by the third subnetwork is described below by using an example in which the preset space is reproducing kernel Hilbert space (reproducing kernel Hilbert space, RKHS).

Specifically, the first domain adaptation layer may map the first feature and the second feature to the RKHS by using multiple kernel maximum mean discrepancy (multiple kernel maximum mean discrepancy, MK-MMD), and determine an MK-MMD distance d (namely, the first distance) between the first feature and the second feature in the RKHS based on a formula (5):

$$d_k^2(p, q) = \left\| E_p\left[\phi\left(x_s\right)\right] - E\left[\phi\left(x_t\right)\right] \right\|_H^2 \quad \text{formula (5)}$$

Herein, d represents a mean distance between the first feature and the second feature that are mapped to the RKHS, p represents a distribution probability of data of the first feature, q represents a distribution probability of data of the second feature, $X_s$ represents the data of the first feature, $X_t$ represents the data of the second feature, $\phi(x_s)$ represents a kernel function used to map the first feature to the RKHS, $\phi(x_t)$ represents a kernel function used to map the second feature to the RKHS, $E_p[\phi(x_s)]$ represents an expectation of the kernel function used to map the first feature to the RKHS, where data in the expectation meets the distribution probability of the data of the first feature, $E[\phi(x_t)]$ represents an expectation of the kernel function used to map the second feature to the RKHS, k represents a type of a kernel function, H represents the RKHS, and the symbol $\|\,\|$ is a symbol representing a Euclidean distance.

Similarly, each domain adaptation layer in the third subnetwork may determine a distance between output features based on the features output by regression layers (including the regression layer in the first subnetwork and the regression layer in the second subnet) corresponding to the domain adaptation layer. If the third subnetwork includes r domain adaptation layers, the r domain adaptation layers may determine r distances. The third subnetwork performs summation on the r distances, to obtain the second loss function.

In an example, the third subnetwork may determine the second loss function based on an optimization objective in a formula (6):

$$\gamma_1 \sum_{1}^{R} d_k^2 \left( D_r^s, D_r^t \right) \quad \text{formula (6)}$$

Herein, $\gamma_1$ represents an adjustment coefficient, d represents an MK-MMD distance between a feature output by the regression layer in the first subnetwork and a feature output by the regression layer in the second subnetwork, R represents that the third subnetwork includes R domain adaptation layers, r represents an $r^{th}$ domain adaptation layer, $D_r^s$ represents a feature output by a regression layer, in the first subnetwork, corresponding to the $r^{th}$ domain adaptation layer, $D_r^t$ represents a feature output by a regression layer, in the second subnetwork, corresponding to the $r^{th}$ domain adaptation layer, and k represents a type of a kernel function.

When the formula (5) is substituted into the formula (6), to simplify an operation and improve operation efficiency, the formula (5) may be converted into an MK-MMD-based unbiased estimator, so that operation complexity of the optimization objective in the formula (6) may be reduced from the power of 2 to the power of 1.

Optionally, if the first image further includes a camera label, a feature map finally output by the first subnetwork further includes camera information. The camera information indicates a camera that is predicted by the first subnetwork and that is used to capture the first image.

In this way, the neural network may determine the third loss function based on the camera information output by the first subnetwork and the camera label in the first image.

Specifically, the neural network may determine a third loss function based on an optimization objective in a formula (7):

$$L(\theta) = -\gamma_2 \sum p(x) log(y) - \left(1 - p(x) log(1 - y)\right) \quad \text{formula (7)}$$

Herein, $p(x)$ is a probability that the camera that is predicted by the first subnetwork based on the input first image and that is used to capture the first image and the camera indicated by the camera label in the first image are a same camera, y represents data of the camera label in the first image, and $\gamma_2$ represents an adjustment coefficient. The training apparatus usually sets $\gamma_2$ to 1 based on an empirical value.

Certainly, if the second image includes a camera label, a feature map finally output by the second subnetwork includes camera information. The camera information indicates a camera that is predicted by the second subnetwork and that is used to capture the second image.

In this way, the neural network may determine the third loss function based on the camera information output by the second subnetwork, the camera label in the second image, and the formula (7). Details are not described herein.

In this case, based on the determined first loss function, second loss function, and third loss function, the training apparatus may perform summation or weighted summation on the first loss function, the second loss function, and the third loss function, to obtain the first target loss function used to adjust the network parameter of the neural network.

In this way, the training apparatus may adjust the network parameter of the neural network based on the first target loss function by using a backpropagation algorithm. A value of a weighting coefficient used for weighted summation is not specifically limited in this embodiment of this application.

When the parameter of the neural network is adjusted by using the backpropagation algorithm, an opposite of the third loss function in the first target loss function may be first obtained by using a gradient reversal layer (gradient reveal layer), and then the parameter of the neural network is adjusted by using the backpropagation algorithm. In this way, when the training apparatus adjusts the parameter of the neural network based on the opposite of the third loss function, the neural network that can accurately predict a camera used to capture an image is adjusted to a neural network that cannot accurately predict the camera used to capture the image. That is, in this embodiment of this application, impact of images captured by different cameras on the temperature measurement model is eliminated in this manner. That is, in this embodiment of this application, the gradient reversal layer is introduced to alleviate impact of a difference between different cameras on temperature measurement performed by the temperature measurement model, so that the temperature measurement model has better adaptability and robustness.

When the first image includes a camera label, the neural network may further include a first gradient reversal layer. The first gradient reversal layer is connected to a last regression layer in the first subnetwork. The first gradient reversal layer is configured to: when the training apparatus adjusts the parameter of the neural network, obtain an opposite of the third loss function determined based on the camera information output by the first subnetwork.

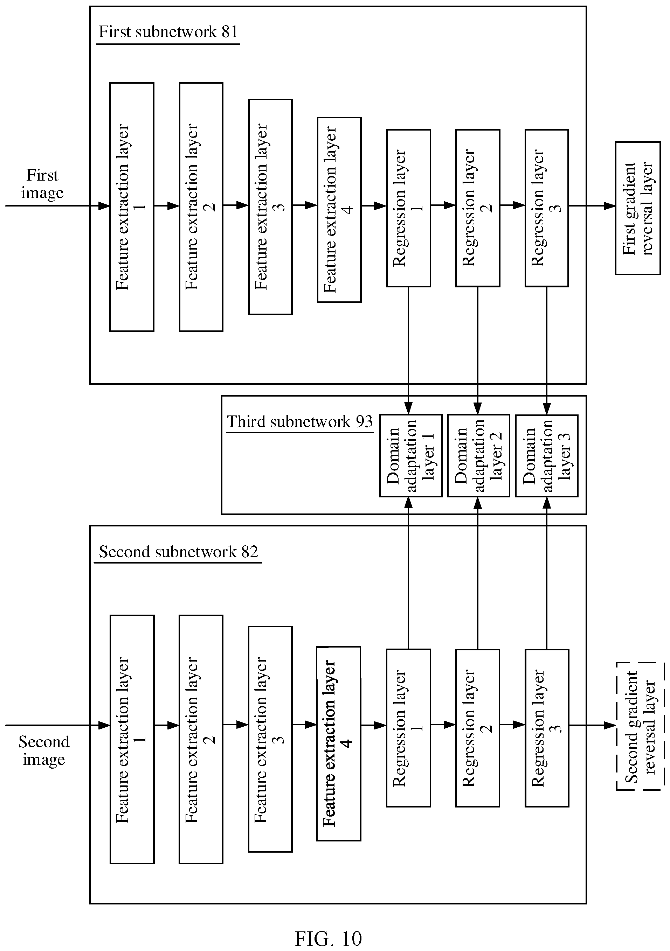

FIG. 10 is a schematic diagram of a structure of another neural network. As shown in FIG. 10, the first gradient reversal layer is connected to the regression layer 3 in the first subnetwork, and is configured to: when the training apparatus adjusts the parameter of the neural network, obtain an opposite of the third loss function determined based on the camera information output by the first subnetwork.

When the second image includes a camera label, the neural network may include a second gradient reversal layer. The second gradient reversal layer is connected to a last regression layer in the second subnetwork. The second gradient reversal layer is configured to: when the training apparatus adjusts the parameter of the neural network, obtain an opposite of the third loss function determined based on the camera information output by the second subnetwork.

As shown in FIG. 10, the second gradient reversal layer is connected to the regression layer 3 in the second subnetwork, and is configured to: when the training apparatus adjusts the parameter of the neural network, obtain an opposite of the third loss function determined based on the camera information output by the second subnetwork.

It may be understood that if each of the first image and the second image includes a camera label, the neural network may determine a loss function 1 based on the camera information output by the first subnetwork, the camera label in the first image, and the formula (7), and the neural network may further determine a loss function 2 based on the camera information output by the second subnetwork, the camera label in the second image, and the formula (7). Then, a sum of the loss function 1 and the loss function 2 is the third loss function in this embodiment of this application.

In this case, the neural network includes a first gradient reversal layer and a second reversal layer. The first gradient reversal layer is connected to a last regression layer in the first subnetwork, and is configured to: when the training apparatus adjusts the parameter of the neural network, obtain an opposite of the loss function 1 determined based on the camera information output by the first subnetwork. The second gradient reversal layer is connected to a last regression layer in the second subnetwork, and is configured to: when the training apparatus adjusts the parameter of the neural network, obtain an opposite of the loss function 2 determined based on the camera information output by the second subnetwork.

In this way, in the training method for a general temperature measurement model in S101 and S102, the training apparatus trains the temperature measurement model by using an infrared image (namely, a first-type image) of the black body that includes a temperature label, and in a process of training the temperature measurement model based on the first-type image, the domain adaptation layer is used to enable the first-type image to learn of a feature of an infrared image (namely, a second-type image) of the preset region that includes no label. In this way, the temperature measurement model trained based on the first-type image can also be used to accurately measure a temperature of the preset region in the second-type image. In comparison with the conventional technology, the temperature measurement model obtained through training by using the method in S101 and S102 can improve temperature measurement precision when a temperature of the preset region in an infrared image is measured.

In addition, in the process of training the temperature measurement model based on the first-type image, the gradient reversal layer is introduced to alleviate impact of a difference between different cameras on temperature measurement performed in the preset region in the infrared image. Therefore, the temperature measurement model obtained through training by using the method is a general temperature measurement model. That is, the temperature measurement model may be used to accurately measure temperatures of the preset region in infrared images captured by different cameras, in other words, when the general temperature measurement model is trained by using the method in S101 and S102, robustness of the temperature measurement model is improved.

It may be learned that to enable the general temperature measurement model trained by using the method in S101 and S102 to be used to measure temperatures of the preset region in infrared images captured by different cameras, in a process of training the general temperature measurement model, the temperature measurement model needs to eliminate impact of a difference between the different cameras on temperature measurement performed in the preset region in the infrared image.

Therefore, to further improve precision of the temperature measurement model, the neural network may be trained by using infrared images captured by a same camera as a training sample, to obtain a dedicated temperature measurement model only for the same camera. In this way, the temperature measurement model does not need to consider the impact of the difference between different cameras on temperature measurement performed in the preset region in the infrared image. Therefore, the precision of the temperature measurement model can be further improved.

A training process for a dedicated temperature measurement model provided in an embodiment of this application is described below.

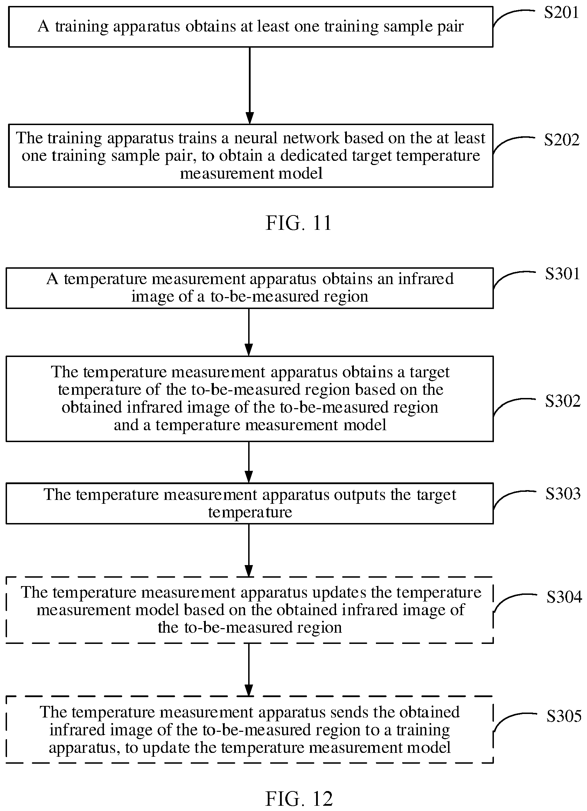

FIG. 11 is a schematic flowchart of a training method for a dedicated temperature measurement model according to an embodiment of this application. The method may be performed by a training apparatus (for example, the training apparatus may be the computing device shown in FIG. 1). The method may include the following several steps.

S201: The training apparatus obtains at least one training sample pair.

Herein, for the obtaining, by the training apparatus, the at least one training sample pair and related descriptions of the at least one training sample pair, refer to the foregoing description of S 101. Details are not described herein.

It should be noted that cameras used to capture infrared images in the at least one training sample are a same camera. Herein, the same camera may be a same camera, or may be cameras of a same model. This is not limited. In this way, the infrared image in the at least one training sample does not need to be labeled with a camera label.

It should be understood that a black body having a preset temperature may have different imaging locations in infrared images of the black body in the at least one training sample pair captured by using the same camera

It should be understood that if the same camera is a same camera (for example, a first camera), a target temperature measurement model obtained through training based on S201 and S202 is a dedicated temperature measurement model for the first camera. In this case, the temperature measurement model may be used as firmware of the first camera, and measure a temperature of a preset region after the first camera captures an infrared image of the preset region.

If the same camera is cameras of a same model (for example, a first model), a target temperature measurement model obtained through training based on S201 and S202 is a dedicated temperature measurement model for the camera of the first model. In this case, the temperature measurement model may be used as firmware of the camera whose model is the first model, and measure a temperature of a preset region after the camera whose model is the first model captures an infrared image of the preset region.

S202: The training apparatus trains a neural network based on the at least one training sample pair, to obtain a dedicated target temperature measurement model.

Specifically, the training apparatus may train, by using the method described in S102, the initial neural network having the structure of the neural network shown in FIG. 9, to obtain the dedicated target temperature measurement model.

A parameter of the initial neural network may be pre-designed by a developer, or may be determined based on the general temperature measurement model obtained through training in S101 and S102. This is not limited.

When the parameter of the initial neural network is determined based on a parameter of the general temperature measurement model obtained through training in S101 and S102, it may be understood that the dedicated temperature measurement model is obtained through training based on the general temperature measurement model obtained through training in S101 and S102. In this case, it is equivalent to increasing a quantity of training samples used to train the dedicated target temperature measurement model. In this way, the dedicated target temperature measurement model obtained by the training apparatus through training can be more stable and have higher temperature measurement precision. In addition, when the parameter of the initial neural network is determined based on the parameter of the general temperature measurement model obtained through training in S101 and S 102, training efficiency of training the dedicated target temperature measurement model can be further improved.

In this way, in the training method for a dedicated temperature measurement model in S201 and S202, the training apparatus trains the temperature measurement model by using an infrared image (namely, a first-type image) of the black body that includes a temperature label, and in a process of training the temperature measurement model based on the first-type image, the first-type image is enabled to learn of a feature of an infrared image (namely, a second-type image) of the preset region that includes no label. In this way, the temperature measurement model trained based on the first-type image can also be used to accurately measure a temperature of the preset region in the second-type image. In comparison with the conventional technology, the temperature measurement model obtained through training by using the method in S201 and S202 can improve temperature measurement precision when a temperature of the preset region in an infrared image is measured.

In addition, all training samples used to train the dedicated temperature measurement model are infrared images captured by the same camera. Therefore, the temperature measurement model obtained through training by using the method in S201 and S202 is a temperature measurement model for the camera. In this way, the dedicated temperature measurement model obtained through training by using the method in S201 and S202 further improves temperature measurement precision when a temperature of the preset region photographed by the camera is measured.

The temperature measurement method provided in embodiments of this application is described below based on the temperature measurement model obtained through training based on S101 and S102 or S201 and S202.

FIG. 12 is a schematic flowchart of a temperature measurement method according to an embodiment of this application. The method may be performed by a temperature measurement apparatus. The method may include the following several steps.

S301: The temperature measurement apparatus obtains an infrared image of a to-be-measured region.

In a possible implementation, the temperature measurement apparatus may first obtain an infrared image of a to-be-measured target, and then recognize and extract the to-be-measured region from the infrared image of the to-be-measured target. The infrared image of the to-be-measured region is an infrared image of a region in which a temperature needs to be measured.

Optionally, an object attribute of the to-be-measured region may be the same as an object attribute of the preset region described above when the temperature measurement model is trained.

For example, if the temperature measurement model obtained through training is used to measure a body temperature of a person, the to-be-measured target is a person. In this case, if the object attribute of the preset region is a forehead of a person, the object attribute of the to-be-measured region is also a forehead of a person; or if the object attribute of the preset region is a wrist of a person, the object attribute of the to-be-measured region is also a wrist of a person. This is not limited thereto.

Optionally, the temperature measurement apparatus may obtain the image of the to-be-measured target by receiving the infrared image of the to-be-measured target that is sent by a terminal device. It may be learned that in this case, the temperature measurement apparatus may be a terminal device, a server, or a computing device in a temperature measurement system. This is not limited.

For example, the terminal device may send the infrared image of the to-be-measured target to the temperature measurement apparatus through the communication interface 13 in FIG. 1 or the communication module 370 in FIG. 3. The temperature measurement apparatus obtains the infrared image of the to-be-measured target as a response.

The infrared image of the to-be-measured target may be an infrared image of the to-be-measured target that is captured by the terminal device in real time, or may be an infrared image of the to-be-measured target that is selected by the terminal device from a local gallery. This is not limited. Infrared images in the local gallery include a captured infrared image, an infrared image downloaded from a network, an infrared image transmitted through Bluetooth, an infrared image sent by social software, a video screenshot in a video, and the like. This is not limited thereto.

Optionally, the temperature measurement apparatus may capture the infrared image of the to-be-measured target in real time, or select the infrared image of the to-be-measured target from a local gallery. For related descriptions of the local gallery, refer to the foregoing descriptions. Details are not described. It may be learned that in this case, the temperature measurement apparatus may be a terminal device that includes an infrared camera, for example, a mobile phone. This is not limited.

In another possible implementation, the temperature measurement apparatus may directly obtain the infrared image of the to-be-measured region.

Optionally, the temperature measurement apparatus may obtain the infrared image of the to-be-measured region by receiving the infrared image of the to-be-measured region that is sent by a terminal device. It may be learned that in this case, the temperature measurement apparatus may be a terminal device, a server, or a computing device in a temperature measurement system. This is not limited.

For example, the terminal device may send the infrared image of the to-be-measured region to the temperature measurement apparatus through the communication interface 13 in FIG. 1 or the communication module 370 in FIG. 3. The temperature measurement apparatus obtains the infrared image of the to-be-measured region as a response.

The infrared image of the to-be-measured target may be an infrared image of the to-be-measured target that is captured by the terminal device in real time, or may be an infrared image of the to-be-measured target that is selected by the terminal device from a local gallery. This is not limited. Infrared images in the local gallery include a captured infrared image, an infrared image downloaded from a network, an infrared image transmitted through Bluetooth, an infrared image sent by social software, a video screenshot in a video, and the like.

S302: The temperature measurement apparatus obtains a target temperature of the to-be-measured region based on the obtained infrared image of the to-be-measured region and a temperature measurement model.

The temperature measurement model may be preset in the temperature measurement apparatus, or the temperature measurement model may be obtained in advance. This is not limited in this embodiment of this application. For example, the temperature measurement apparatus may obtain a latest updated temperature measurement model from a server in advance.

Specifically, the temperature measurement apparatus may use the obtained infrared image of the to-be-measured region as an input parameter of the temperature measurement model, and may obtain the target temperature of the to-be-measured region by performing an operation by using the temperature measurement model.

It may be learned that when the temperature measurement apparatus determines the target temperature of the to-be-measured region based on the temperature measurement model, the target temperature does not need to be corrected by capturing an infrared image of a black body in real time.

The temperature measurement model may be obtained by training a neural network based on infrared images of the black body for which different preset temperatures are set and a plurality of infrared images of the preset region.

In a case, if the infrared images of the black body for which the different preset temperatures are set are infrared images captured by using different cameras, the infrared images of the black body for which the different preset temperatures are set and the plurality of infrared images of the preset region may be used to obtain a general temperature measurement model through training by performing step S102. Herein, for related descriptions of obtaining the general temperature measurement model through training, refer to the foregoing descriptions. Details are not described herein.

In another case, if the infrared images of the black body for which the different preset temperatures are set are infrared images captured by using a same camera (for example, a same camera or cameras of a same model), the infrared images of the black body for which the different preset temperatures are set and the plurality of infrared images of the preset region may be used to obtain a dedicated temperature measurement model through training by performing step S202. Herein, for related descriptions of obtaining the dedicated temperature measurement model through training, refer to the foregoing descriptions. Details are not described herein.

Optionally, in this case, a camera used to capture the infrared image of the to-be-measured region in step S301 is the same as the camera used to capture the infrared images of the black body for which the different preset temperatures are set.

For example, if all cameras used to capture the infrared images of the black body for which the different preset temperatures are set are a camera 1, the camera used to capture the infrared image of the to-be-measured region in step S301 is also the camera 1; or if a model of the camera used to capture the infrared images of the black body for which the different preset temperatures are set is a model 1, a model of the camera used to capture the infrared image of the to-be-measured region in step S301 is also the model 1.

S303: The temperature measurement apparatus outputs the target temperature.

Optionally, the temperature measurement apparatus may output the target temperature in a form of text, a voice, or the like. Certainly, this is not limited thereto.

For example, the temperature measurement apparatus may display the target temperature to a user through the display panel 351 shown in FIG. 3; or the temperature measurement apparatus may read the target temperature to a user through the speaker 361 shown in FIG. 3.

S304 (optional): The temperature measurement apparatus updates the temperature measurement model based on the obtained infrared image of the to-be-measured region.

In this case, at least one infrared image of the black body for which a preset temperature is set is preset in the temperature measurement apparatus. In this way, the temperature measurement apparatus may train the temperature measurement model based on the at least one infrared image of the black body for which the preset temperature is set and the infrared image of the to-be-measured region by using the method in S101 and S102 or S201 and S202, to update the training model in S101.

S305 (optional): The temperature measurement apparatus sends the obtained infrared image of the to-be-measured region to a training apparatus, to update the temperature measurement model.

The training apparatus may be the training apparatus described above, or may be any computing device that has a computing processing capability.

In this way, after the temperature measurement apparatus sends the obtained infrared image of the to-be-measured region to the training apparatus, the training apparatus receives the infrared image of the to-be-measured region as a response. In this way, the training apparatus may train the temperature measurement model in S101 based on the at least one preset infrared image of the black body for which the preset temperature is set and the infrared image of the to-be-measured region by using the method in S101 and S102 or S201 and S202, to update the training model.

It may be understood that when an updated training model is preset on a server or any network platform (for example, a cloud or a cloud server), the temperature measurement apparatus in this embodiment of this application may obtain the updated temperature measurement model from the server or the any network platform. In this way, the temperature measurement apparatus may perform step S302 based on the updated temperature measurement model, to obtain the target temperature of the to-be-measured region.

The temperature measurement apparatus may actively obtain a latest updated temperature measurement model from the server or the any network platform. For example, the temperature measurement apparatus may periodically and actively obtain the latest updated temperature measurement model from the server or the any network platform. Alternatively, the temperature measurement apparatus may receive a latest updated network model released by the server or the any network platform. For example, the temperature measurement apparatus may receive the latest updated network model periodically released by the server or the any network platform. This is not limited.

In this way, the temperature measurement apparatus may perform step S302 based on the obtained latest updated network model, to obtain the target temperature of the to-be-measured region.

For ease of understanding, the temperature measurement method is described below with reference to a specific example.

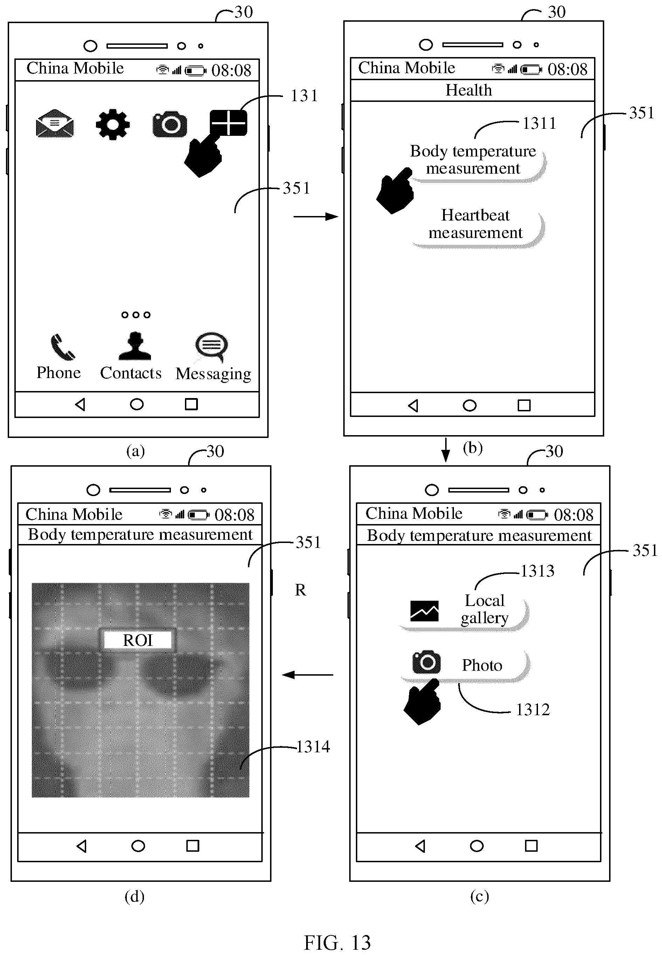

Refer to FIG. 13. An example in which the temperature measurement apparatus is the mobile phone 30 including an infrared camera shown in FIG. 3 is used for description. As shown in FIG. 13, a health app with a temperature measurement function is installed in the mobile phone 30.

The temperature measurement model obtained through training based on steps S101 and S 102 or steps S201 and S202 may be used as a functional module in the health app, to implement the temperature measurement function of the health app. Certainly, the temperature measurement model may alternatively be preset in firmware of a camera in the mobile phone 30. In this way, the temperature measurement function of the health app may be implemented by invoking the firmware of the camera in the mobile phone 30.

As shown in (a) in FIG. 13, when a home screen of the mobile phone 30 is displayed on a display panel 351 of the mobile phone 30, a user A may tap an icon 131 used to represent the health app, to enter an application interface of the health app.

Then, as shown in (b) in FIG. 13, the user A taps a "body temperature measurement" icon 1311 in the application interface of the health app, to enter a body temperature measurement interface of the health app.

Then, as shown in (c) in FIG. 13, the user A taps a "photo" icon 1312 in the body temperature measurement interface, and the mobile phone 30 starts the infrared camera, and enters a photographing interface.

Then, as shown in (d) in FIG. 13, in the photographing interface, the user A taps a photo button to capture an infrared image 1314 of a to-be-measured target in real time. It should be understood that the infrared image 1314 shown in FIG. 13 is a gray-white image that is visible to human eyes and that is obtained after an original infrared image captured by the infrared camera in the mobile phone 30 is converted by using a preset conversion rule.

Certainly, the user A may tap a "local gallery" icon 1313 in the body temperature measurement interface, to select an infrared image of the to-be-measured target from a local gallery. Herein, the local gallery includes an infrared image captured by the infrared camera in the mobile phone 30, an infrared image downloaded from a network, an infrared image transmitted through Bluetooth, an infrared image sent by social software, a video screenshot in a video, a screen snapshot, and the like.

In this way, the mobile phone 30 may recognize and extract a to-be-measured region (for example, a region of interest (region of interest, ROI) shown in (d) in FIG. 13) from the infrared image of the to-be-measured target, and input an original infrared image of the to-be-measured region to the temperature measurement model preset in the mobile phone 30, to obtain a target temperature of the to-be-measured region.

Certainly, the mobile phone 30 may further send the extracted infrared image of the to-be-measured region to a server, and a temperature measurement model preset in the server measures the temperature of the to-be-measured region. Then, the server sends the measured target temperature of the to-be-measured region to the mobile phone 30.

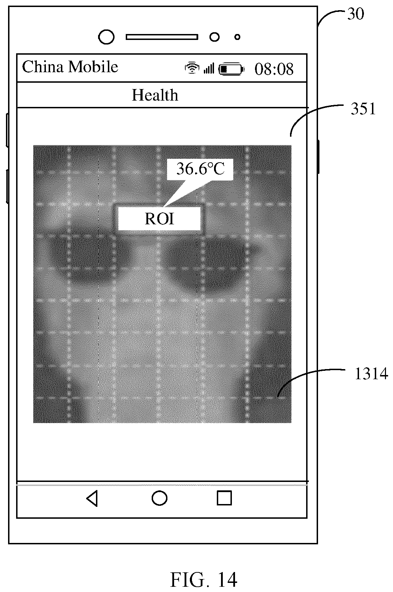

Then, optionally, as shown in FIG. 14, the mobile phone 30 may present the target temperature "36.6°C" of the to-be-measured region to the user in a form of comment text on the infrared image 1314 of the to-be-measured target displayed on the display panel 351.

It should be understood that the mobile phone 30 may display the target temperature of the to-be-measured region in a form such as text/a graphic identifier on the display panel 351 in any other manner. This is not limited in this embodiment of this application.

Optionally, after determining the target temperature of the to-be-measured region, the mobile phone 30 may play audio of the target temperature "36.6°C" to the user through the speaker 361 shown in FIG. 3. This is not limited.

Optionally, the mobile phone 30 may further train, based on the extracted infrared image of the to-be-measured region and at least one preset infrared image of a black body for which a preset temperature is set, the temperature measurement model preset in the mobile phone 30, to update the temperature measurement model.

Alternatively, the mobile phone 30 sends the extracted infrared image of the to-be-measured region to the server, so that the server trains, based on the infrared image of the to-be-measured region and at least one preset infrared image of a black body for which a preset temperature is set, the temperature measurement model preset in the mobile phone 30, to update the temperature measurement model. In this case, the temperature measurement model is preset in the server

In this way, in the temperature measurement method provided in this embodiment of this application, when the temperature of the to-be-measured region in the infrared image of the to-be-measured target is measured by using the temperature measurement model (for example, the temperature measurement model trained by using the method in S101 and S102 or the temperature measurement model trained by using the method in S201 and S202) obtained through training based on infrared images of the black body for which different preset temperatures are set and a plurality of infrared images of the preset region, temperature measurement precision may be improved to a range from $\pm0.1$°C to $\pm0.2$°C without performing correction in real time by using the black body. In comparison with temperature measurement precision from $\pm0.3$°C to $\pm0.5$°C implemented in the conventional technology, the thermal imaging (that is, an infrared image)-based temperature measurement method provided in this embodiment of this application significantly improves the temperature measurement precision.

In conclusion, embodiments of this application provide the temperature measurement method and the training method for a temperature measurement model. In the training method for a temperature measurement model, the temperature measurement model is trained by using an infrared image (namely, a first-type image) of the black body that includes a temperature label, and in a process of training the temperature measurement model based on the first-type image, the domain adaptation layer is used to enable the first-type image to learn of a feature of an infrared image (namely, a second-type image) of the preset region that includes no label. In this way, the temperature measurement model trained based on the first-type image can also be used to accurately measure a temperature of the preset region in the second-type image. In comparison with the conventional technology, the temperature measurement model obtained through training by using the method can improve temperature measurement precision when a temperature of the preset region in an infrared image is measured.

In addition, in the process of training the temperature measurement model based on the first-type image, the gradient reversal layer is introduced to alleviate impact of a difference between different cameras on temperature measurement performed in the preset region in the infrared image. Therefore, the temperature measurement model obtained through training by using the method is a general temperature measurement model. That is, the temperature measurement model may be used to accurately measure temperatures of the preset region in infrared images captured by different cameras, in other words, when the temperature measurement model is trained by using the method, robustness of the temperature measurement model is improved.

Alternatively, if all training samples used to train the temperature measurement model are infrared images captured by a same camera, the temperature measurement model obtained through training by using the method is a temperature measurement model for the camera. In this way, the dedicated temperature measurement model obtained through training by using the method further improves temperature measurement precision when a temperature of the preset region photographed by the same camera is measured.

In this way, when the temperature of the to-be-measured region in the infrared image of the to-be-measured target is measured by using the temperature measurement model obtained through training by using the method provided in embodiments of this application, temperature measurement precision may be improved without performing correction in real time by using the black body, in other words, the temperature measurement method provided in embodiments of this application improves thermal imaging (that is, an infrared image)-based temperature measurement precision.

The solutions provided in embodiments of this application are mainly described above from the perspective of the method. To implement the foregoing functions, corresponding hardware structures and/or software modules for performing the functions are included. It should be readily appreciated by a person skilled in the art that the example units, algorithms, and steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the temperature measurement apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, module division is an example, and is merely logical function division. During actual implementation, another division manner may be used.

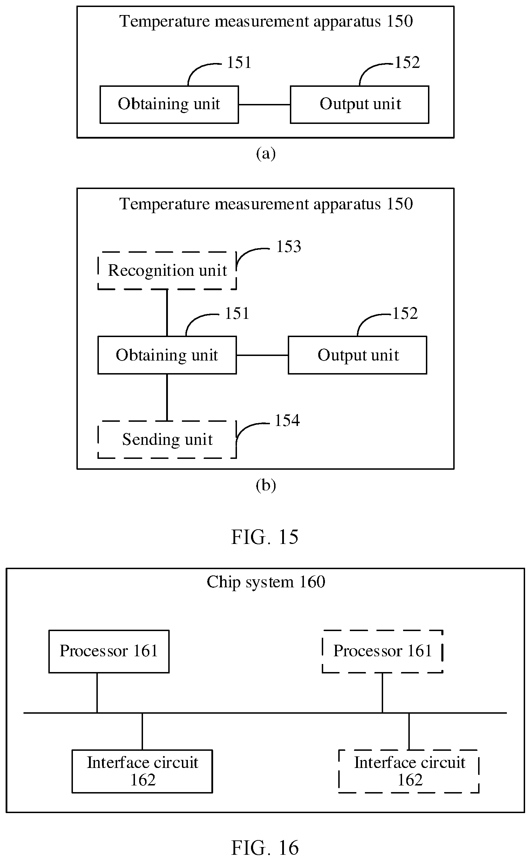

FIG. 15 is a schematic diagram of a structure of a temperature measurement apparatus 150 according to an embodiment of this application. The temperature measurement apparatus 150 may be configured to perform the foregoing temperature measurement method, for example, configured to perform the method shown in FIG. 12. As shown in (a) in FIG. 15, the temperature measurement apparatus 150 may include an obtaining unit 151 and an output unit 152.

The obtaining unit 151 is configured to obtain an infrared image of a to-be-measured region; and is configured to obtain a target temperature of the to-be-measured region based on the infrared image of the to-be-measured region and a temperature measurement model. The output unit 152 is configured to output the target temperature. The temperature measurement model is obtained through training based on an infrared image of a black body and an infrared image of a preset region.

In an example, with reference to FIG. 12, the obtaining unit 151 may be configured to perform S301 and S302, and the output unit 152 may be configured to perform S303.

Optionally, the obtaining unit 151 is specifically configured to use the infrared image of the to-be-measured region as an input parameter of the temperature measurement model, to obtain the target temperature of the to-be-measured region by using the temperature measurement model.

In an example, with reference to FIG. 12, the obtaining unit 151 may be configured to perform S302.

Optionally, the obtaining unit 151 is further configured to: obtain an updated temperature measurement model from a server or a cloud, and obtain the target temperature of the to-be-measured region based on the infrared image of the to-be-measured region and the updated temperature measurement model.

In an example, with reference to FIG. 12, the obtaining unit 151 may be configured to perform S302.

Optionally, the preset region is a region in which a temperature needs to be measured in an infrared image obtained by photographing a preset object; and the to-be-measured region is a region in which a temperature needs to be measured in an infrared image of a to-be-measured target.

Optionally, any temperature generated by the black body is a constant temperature.

Optionally, the obtaining unit 151 is specifically configured to obtain the infrared image of the to-be-measured target. As shown in (b) in FIG. 15, the temperature measurement apparatus 150 may further include a recognition unit 153, configured to recognize the to-be-measured region from the infrared image of the to-be-measured target, to obtain the infrared image of the to-be-measured region.

In an example, with reference to FIG. 12, the obtaining unit 151 and the recognition unit 153 may be configured to perform S301.

Optionally, the obtaining unit 151 is specifically configured to: receive the infrared image of the to-be-measured target; or obtain the infrared image of the to-be-measured target from a local gallery.

In an example, with reference to FIG. 12, the obtaining unit 151 may be configured to perform S301.

Optionally, the output unit 152 is configured to output the target temperature by using text or audio.

In an example, with reference to FIG. 12, the output unit 152 may be configured to perform S303.

Optionally, as shown in (b) in FIG. 15, the temperature measurement apparatus 150 may further include a sending unit 154, configured to send the infrared image of the to-be-measured region to a training apparatus. The infrared image of the to-be-measured region is used by the training apparatus to update the temperature measurement model.

In an example, with reference to FIG. 12, the sending unit 154 may be configured to perform S305.

Optionally, the temperature measurement model is obtained by training a neural network based on at least one training sample pair. Any one of the at least one training sample pair includes a first image and a second image. The first image is an infrared image of the black body for which a preset temperature is set, and the first image includes a temperature label indicating the preset temperature. The second image is an infrared image of the preset region.

Optionally, the preset temperature is used as an actual temperature of the black body, and is used to determine, when the temperature measurement model is trained, a first loss function corresponding to the first image.

Optionally, infrared images of the black body in different training sample pairs in the at least one training sample pair are infrared images that are captured by a camera apparatus and that are of the black body at different locations in a field of view.

Optionally, infrared images of the black body in the at least one training sample pair are captured by using a same camera apparatus.

Optionally, the black body has different imaging locations in the infrared images of the black body in the at least one training sample pair.

Optionally, the any training sample pair is used to determine the first loss function and a second loss function. The first loss function is determined based on a measured temperature that is of the black body in the first image and that is measured by the neural network and the preset temperature indicated by the temperature label in the first image. The second loss function is determined based on a difference that is between a feature of the first image and a feature of the second image and that is determined by the neural network. The temperature measurement model is obtained by training the neural network based on a first loss function and a second loss function corresponding to each of the at least one training sample pair.

Optionally, infrared images of the black body in the at least one training sample pair are captured by using different camera apparatuses; and the first image further includes a camera apparatus label indicating a camera apparatus that obtains the first image; or the second image includes a camera apparatus label indicating a camera apparatus that obtains the second image.

Optionally, the any training sample pair is used to determine the first loss function, a second loss function, and a third loss function. The third loss function is determined based on a camera apparatus that is predicted by the neural network and that is used to capture the first image and the camera apparatus indicated by the camera apparatus label in the first image, or the third loss function is determined based on a camera apparatus that is predicted by the neural network and that is used to capture the second image and the camera apparatus indicated by the camera apparatus label in the second image. The temperature measurement model is obtained by training the neural network based on a first loss function, a second loss function, and a third loss function corresponding to each of the at least one training sample pair.

For specific descriptions of the foregoing optional manners, refer to the foregoing method embodiments. Details are not described herein. In addition, for explanations of any temperature measurement apparatus 150 provided above and descriptions of beneficial effects, refer to the foregoing corresponding method embodiments. Details are not described.

In an example, with reference to FIG. 3, functions implemented by the obtaining unit 151 and the recognition unit 153 in the temperature measurement apparatus 150 may be implemented by the processor 310 in FIG. 3 by executing the program code in the internal memory 320 in FIG. 3, a function that can be implemented by the output unit 152 may be implemented by using the display panel 351 or the audio module 360 in FIG. 3, and a function implemented by the sending unit 154 may be implemented by using the communication module 370 in FIG. 3.

An embodiment of this application further provides a chip system 160. As shown in FIG. 16, the chip system 160 includes at least one processor and at least one interface circuit.

In an example, when the chip system 160 includes one processor and one interface circuit, the processor may be a processor 161 shown in a solid line box (or a processor 161 shown in a dashed line box) in FIG. 16, and the interface circuit may be an interface circuit 162 shown in a solid line box (or an interface circuit 162 shown in a dashed line box) in FIG. 16.

When the chip system 160 includes two processors and two interface circuits, the two processors include a processor 161 shown in a solid line box and a processor 161 shown in a dashed line box in FIG. 16, and the two interface circuits include an interface circuit 162 shown in a solid line box and an interface circuit 162 shown in a dashed line box in FIG. 16. This is not limited.

The processor 161 and the interface circuit 162 may be interconnected by using a line. For example, the interface circuit 162 may be configured to receive a signal (for example, an infrared image of a to-be-measured target). For another example, the interface circuit 162 may be configured to send a signal to another apparatus (for example, the processor 161).

For example, the interface circuit 162 may read instructions stored in a memory, and send the instructions to the processor 161. When the instructions are executed by the processor 161, a temperature measurement apparatus is enabled to perform the steps in the foregoing embodiments. Certainly, the chip system 160 may further include another discrete device. This is not specifically limited in this embodiment of this application.

Another embodiment of this application further provides a computer-readable storage medium. The computer-readable storage medium stores instructions. When the instructions are run on a temperature measurement apparatus, the temperature measurement apparatus performs the steps performed by the temperature measurement apparatus in the method procedures shown in the foregoing method embodiments.

In some embodiments, the disclosed methods may be implemented as computer program instructions encoded in a machine-readable format on a computer-readable storage medium or encoded on another non-transitory medium or product.

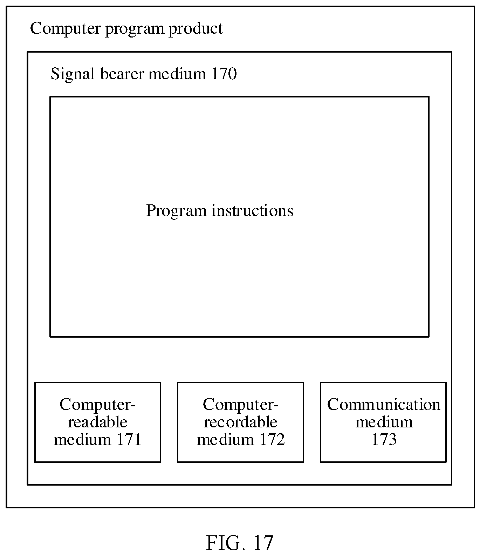

FIG. 17 shows an example of a conceptual partial view of a computer program product according to an embodiment of this application. The computer program product includes a computer program used to execute a computer process on a computing device.

In an embodiment, the computer program product is provided by using a signal bearer medium 170. The signal bearer medium 170 may include one or more program instructions. When the one or more program instructions are run by one or more processors, the functions or some of the functions described for FIG. 12 may be provided. Therefore, for example, one or more features described with reference to S301 to S303 in FIG. 12 may be carried by one or more instructions associated with the signal bearer medium 170. In addition, the program instructions in FIG. 17 are also described as example instructions.

In some examples, the signal bearer medium 170 may include a computer-readable medium 171. The medium is, for example, but is not limited to a hard disk drive, a compact disk (CD), a digital video disc (DVD), a digital tape, a memory, a read-only memory (read-only memory, ROM), or a random access memory (random access memory, RAM).

In some implementations, the signal bearer medium 170 may include a computer-recordable medium 172. The medium is, for example, but is not limited to a memory, a read/write (R/W) CD, and an R/W DVD.

In some implementations, the signal bearer medium 170 may include a communication medium 173. The medium is, for example, but is not limited to a digital and/or analog communication medium (for example, an optical fiber cable, a waveguide, a wired communication link, or a wireless communication link).

The signal bearer medium 170 may be conveyed by a wireless communication medium 173 (for example, a wireless communication medium that complies with the IEEE 1202.11 standard or another transmission protocol). The one or more program instructions may be, for example, computer-executable instructions or logic implementation instructions.

In some examples, the temperature measurement apparatus described for FIG. 12 may be configured to provide various operations, functions, or actions in response to one or more program instructions in the computer-readable medium 171, the computer-recordable medium 172, and/or the communication medium 173.

It should be understood that the arrangement described herein is merely used as an example. Therefore, a person skilled in the art appreciates that another arrangement and another element (for example, a machine, an interface, a function, a sequence, and a group of functions) can be used to replace the arrangement, and some elements may be omitted depending on a desired result.

In addition, many of the described elements are functional entities that can be implemented as discrete or distributed components, or implemented in any suitable combination at any suitable location in combination with another component.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer-executable instructions are executed on a computer, all or some of the procedures or functions according to embodiments of this application are generated.

The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

The computer-readable storage medium may be any usable medium that can be accessed by a computer, or a data storage device, such as a server or a data center, into which one or more usable media are integrated. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A temperature measurement method, comprising:

   obtaining an infrared image of a to-be-measured region;
   obtaining a target temperature of the to-be-measured region based on the infrared image of the to-be-measured region and a temperature measurement model, wherein the temperature measurement model is obtained through training based on an infrared image of a black body and an infrared image of a preset region; and
   outputting the target temperature.

2. The method according to claim 1, wherein the obtaining a target temperature of the to-be-measured region based on the infrared image of the to-be-measured region and a temperature measurement model comprises:
   using the infrared image of the to-be-measured region as an input parameter of the temperature measurement model, to obtain the target temperature of the to-be-measured region by using the temperature measurement model.

3. The method according to claim 1 or 2, wherein the method further comprises:
   obtaining an updated temperature measurement model from a server or a cloud, and obtaining the target temperature of the to-be-measured region based on the infrared image of the to-be-measured region and the updated temperature measurement model.

4. The method according to any one of claims 1 to 3, wherein

   the preset region is a region in which a temperature needs to be measured in an infrared image obtained by photographing a preset object; and
   the to-be-measured region is a region in which a temperature needs to be measured in an infrared image of a to-be-measured target.

5. The method according to any one of claims 1 to 4, wherein
   any temperature generated by the black body is a constant temperature.

6. The method according to any one of claims 1 to 5, wherein the obtaining an infrared image of a to-be-measured region comprises:

   obtaining the infrared image of the to-be-measured target; and
   recognizing the to-be-measured region from the infrared image of the to-be-measured target, to obtain the infrared image of the to-be-measured region.

7. The method according to claim 6, wherein the obtaining the infrared image of the to-be-measured target comprises:

   receiving the infrared image of the to-be-measured target; or
   obtaining the infrared image of the to-be-measured target from a local gallery.

8. The method according to any one of claims 1 to 7, wherein the outputting the target temperature comprises: outputting the target temperature by using text or audio.

9. The method according to any one of claims 1 to 8, wherein the method further comprises: sending the infrared image of the to-be-measured region to a training apparatus, wherein the infrared image of the to-be-measured region is used by the training apparatus to update the temperature measurement model.

10. The method according to any one of claims 1 to 9, wherein the temperature measurement model is obtained by training a neural network based on at least one training sample pair; and
any one of the at least one training sample pair comprises a first image and a second image; the first image is an infrared image of the black body for which a preset temperature is set, the first image comprises a temperature label, and the temperature label indicates the preset temperature; and the second image is an infrared image of the preset region.

11. The method according to claim 10, wherein
the preset temperature is used as an actual temperature of the black body, and is used to determine, when the temperature measurement model is trained, a first loss function corresponding to the first image.

12. The method according to claim 10 or 11, wherein
infrared images of the black body in different training sample pairs in the at least one training sample pair are infrared images that are captured by a camera apparatus and that are of the black body at different locations in a field of view.

13. The method according to any one of claims 10 to 12, wherein
infrared images of the black body in the at least one training sample pair are captured by using a same camera apparatus.

14. The method according to claim 13, wherein
the black body has different imaging locations in the infrared images of the black body in the at least one training sample pair.

15. The method according to any one of claims 10 to 14, wherein

the any training sample pair is used to determine the first loss function and a second loss function; the first loss function is determined based on a measured temperature that is of the black body in the first image and that is measured by the neural network and the preset temperature indicated by the temperature label in the first image; and the second loss function is determined based on a difference that is between a feature of the first image and a feature of the second image and that is determined by the neural network; and
the temperature measurement model is obtained by training the neural network based on a first loss function and a second loss function corresponding to each of the at least one training sample pair.

16. The method according to any one of claims 10 to 12, wherein infrared images of the black body in the at least one training sample pair are captured by using different camera apparatuses; and

the first image further comprises a camera apparatus label, and the camera apparatus label indicates a camera apparatus that obtains the first image; or
the second image comprises a camera apparatus label, and the camera apparatus label indicates a camera apparatus that obtains the second image.

17. The method according to claim 16, wherein

the any training sample pair is used to determine the first loss function, a second loss function, and a third loss function; and the third loss function is determined based on a camera apparatus that is predicted by the neural network and that is used to capture the first image and the camera apparatus indicated by the camera apparatus label in the first image, or the third loss function is determined based on a camera apparatus that is predicted by the neural network and that is used to capture the second image and the camera apparatus indicated by the camera apparatus label in the second image; and
the temperature measurement model is obtained by training the neural network based on a first loss function, a second loss function, and a third loss function corresponding to each of the at least one training sample pair.

**18.** A temperature measurement apparatus, comprising:

an obtaining unit, configured to: obtain an infrared image of a to-be-measured region; and obtain a target temperature of the to-be-measured region based on the infrared image of the to-be-measured region and a temperature measurement model, wherein the temperature measurement model is obtained through training based on an infrared image of a black body and an infrared image of a preset region; and
an output unit, configured to output the target temperature.

**19.** The apparatus according to claim 18, wherein
the obtaining unit is specifically configured to use the infrared image of the to-be-measured region as an input parameter of the temperature measurement model, to obtain the target temperature of the to-be-measured region by using the temperature measurement model.

**20.** The apparatus according to claim 18 or 19, wherein
the obtaining unit is further configured to: obtain an updated temperature measurement model from a server or a cloud, and obtain the target temperature of the to-be-measured region based on the infrared image of the to-be-measured region and the updated temperature measurement model.

**21.** The apparatus according to any one of claims 18 to 20, wherein

the preset region is a region in which a temperature needs to be measured in an infrared image obtained by photographing a preset object; and
the to-be-measured region is a region in which a temperature needs to be measured in an infrared image of a to-be-measured target.

**22.** The apparatus according to any one of claims 18 to 21, wherein
any temperature generated by the black body is a constant temperature.

**23.** The apparatus according to any one of claims 18 to 22, wherein

the obtaining unit is specifically configured to obtain the infrared image of the to-be-measured target; and
the apparatus further comprises a recognition unit, configured to recognize the to-be-measured region from the infrared image of the to-be-measured target, to obtain the infrared image of the to-be-measured region.

**24.** The apparatus according to claim 23, wherein the obtaining unit is specifically configured to:

receive the infrared image of the to-be-measured target; or
obtain the infrared image of the to-be-measured target from a local gallery.

**25.** The apparatus according to any one of claims 18 to 24, wherein
the output unit is configured to output the target temperature by using text or audio.

**26.** The apparatus according to any one of claims 18 to 25, wherein the apparatus further comprises:
a sending unit, configured to send the infrared image of the to-be-measured region to a training apparatus, wherein the infrared image of the to-be-measured region is used by the training apparatus to update the temperature measurement model.

**27.** The apparatus according to any one of claims 18 to 26, wherein the temperature measurement model is obtained by training a neural network based on at least one training sample pair; and
any one of the at least one training sample pair comprises a first image and a second image; the first image is an infrared image of the black body for which a preset temperature is set, the first image comprises a temperature label, and the temperature label indicates the preset temperature; and the second image is an infrared image of the preset region.

**28.** The apparatus according to claim 27, wherein
the preset temperature is used as an actual temperature of the black body, and is used to determine, when the temperature measurement model is trained, a first loss function corresponding to the first image.

**29.** The apparatus according to claim 27 or 28, wherein
infrared images of the black body in different training sample pairs in the at least one training sample pair are infrared images that are captured by a camera apparatus and that are of the black body at different locations in a field of view.

**30.** The apparatus according to any one of claims 27 to 29, wherein
infrared images of the black body in the at least one training sample pair are captured by using a same camera apparatus.

**31.** The apparatus according to claim 30, wherein
the black body has different imaging locations in the infrared images of the black body in the at least one training sample pair.

**32.** The apparatus according to any one of claims 27 to 31, wherein

the any training sample pair is used to determine the first loss function and a second loss function; the first loss function is determined based on a measured temperature that is of the black body in the first image and that is measured by the neural network and the preset temperature indicated by the temperature label in the first image; and the second loss function is determined based on a difference that is between a feature of the first image and a feature of the second image and that is determined by the neural network; and
the temperature measurement model is obtained by training the neural network based on a first loss function and a second loss function corresponding to each of the at least one training sample pair.

**33.** The apparatus according to any one of claims 27 to 29, wherein infrared images of the black body in the at least one training sample pair are captured by using different camera apparatuses; and

the first image further comprises a camera apparatus label, and the camera apparatus label indicates a camera apparatus that obtains the first image; or
the second image comprises a camera apparatus label, and the camera apparatus label indicates a camera apparatus that obtains the second image.

**34.** The apparatus according to claim 33, wherein

the any training sample pair is used to determine the first loss function, a second loss function, and a third loss function; and the third loss function is determined based on a camera apparatus that is predicted by the neural network and that is used to capture the first image and the camera apparatus indicated by the camera apparatus label in the first image, or the third loss function is determined based on a camera apparatus that is predicted by the neural network and that is used to capture the second image and the camera apparatus indicated by the camera apparatus label in the second image; and
the temperature measurement model is obtained by training the neural network based on a first loss function, a second loss function, and a third loss function corresponding to each of the at least one training sample pair

**35.** A temperature measurement apparatus, comprising a memory and one or more processors, wherein the memory is configured to store computer instructions, and the processor is configured to invoke the computer instructions to perform the method according to any one of claims 1 to 17.

**36.** A temperature measurement device, comprising a processor and a camera apparatus, wherein

the camera apparatus is configured to capture an infrared image of a to-be-measured target; and
the processor is configured to perform the method according to any one of claims 1 to 17, to obtain a target temperature of a to-be-measured region in the infrared image.

**37.** A temperature measurement system, comprising a computing device and a camera device, wherein

the camera device is configured to obtain an infrared image of a to-be-measured region, wherein the to-be-measured region is a region in which a temperature needs to be measured in an infrared image of a to-be-measured target; and
the computing device is configured to perform the method according to any one of claims 1 to 17, to obtain a target temperature of the to-be-measured region in the infrared image.

**38.** A computer-readable storage medium, wherein the computer-readable storage medium stores a computer program, and when the computer program is run on a temperature measurement apparatus, the temperature measurement apparatus is enabled to perform the method according to any one of claims 1 to 17.

FIG. 1

FIG. 2

```
                    ┌─────────────────────┐
                    │   Communication     │
                    │   module [370]      │
                    └─────────────────────┘
                              │
┌──────────────────┐   ┌──────────────────────┐      ┌──────────────────┐   ┌─────────────┐
│ Internal memory  │   │                      │      │                  │   │  Speaker    │
│      [320]       │───│                      │      │                  │───│   [361]     │
└──────────────────┘   │                      │      │                  │   └─────────────┘
                       │                      │      │                  │   ┌─────────────┐
┌──────────────────┐   │                      │      │   Audio          │   │  Receiver   │
│ External memory  │   │     Processor        │──────│   module         │───│   [362]     │
│ interface [330]  │───│                      │      │                  │   └─────────────┘
└──────────────────┘   │      [310]           │      │   [360]          │   ┌─────────────┐
                       │                      │      │                  │   │ Microphone  │
┌──────────────────┐   │                      │      │                  │───│   [363]     │
│    Cameras       │   │                      │      │                  │   └─────────────┘
│   1–N [340]      │───│                      │      │                  │   ┌─────────────┐
└──────────────────┘   │                      │      │                  │   │  Headset    │
                       │                      │      └──────────────────┘───│ jack [364]  │
┌──────────┐ ┌──────┐  │                      │                             └─────────────┘
│ Display  │ │Touch │  │                      │
│panel[351]│─│screen│──│                      │
├──────────┤ │      │  │                      │
│Touchpad  │ │[350] │  │                      │
│  [352]   │─│      │  │                      │
└──────────┘ └──────┘  └──────────────────────┘
```

FIG. 3

┌────────────────────────────────────────────────────────────────┐
│ A training apparatus obtains at least one training sample pair  │────  S101
└────────────────────────────────────────────────────────────────┘
                              │
                              ▼
┌────────────────────────────────────────────────────────────────┐
│  The training apparatus trains a neural network based on        │
│  the at least one training sample pair, to obtain a target      │────  S102
│  temperature measurement model                                  │
└────────────────────────────────────────────────────────────────┘

FIG. 4

FIG. 5

FIG. 6

FIG. 7

FIG. 8

EP 4 249 869 A1

FIG. 9

FIG. 10

A training apparatus obtains at least one training sample pair ⌐ S201

The training apparatus trains a neural network based on the at least one training sample pair, to obtain a dedicated target temperature measurement model ⌐ S202

FIG. 11

A temperature measurement apparatus obtains an infrared image of a to-be-measured region ⌐ S301

The temperature measurement apparatus obtains a target temperature of the to-be-measured region based on the obtained infrared image of the to-be-measured region and a temperature measurement model ⌐ S302

The temperature measurement apparatus outputs the target temperature ⌐ S303

The temperature measurement apparatus updates the temperature measurement model based on the obtained infrared image of the to-be-measured region ⌐ S304

The temperature measurement apparatus sends the obtained infrared image of the to-be-measured region to a training apparatus, to update the temperature measurement model ⌐ S305

FIG. 12

FIG. 13

FIG. 14

Temperature measurement apparatus 150

151

152

Obtaining unit

Output unit

(a)

Temperature measurement apparatus 150

153

Recognition unit

151

152

Obtaining unit

Output unit

154

Sending unit

(b)

FIG. 15

Chip system 160

Processor 161

Processor 161

Interface circuit
162

Interface circuit
162

FIG. 16

Computer program product

Signal bearer medium 170

Program instructions

| Computer-readable medium 171 | Computer-recordable medium 172 | Communication medium 173 |

FIG. 17

## INTERNATIONAL SEARCH REPORT

| International application No. |
| --- |
| **PCT/CN2021/133761** |

**A.    CLASSIFICATION OF SUBJECT MATTER**

G01J 5/00(2022.01)i

According to International Patent Classification (IPC) or to both national classification and IPC

**B.    FIELDS SEARCHED**

Minimum documentation searched (classification system followed by classification symbols)

G01J5

Documentation searched other than minimum documentation to the extent that such documents are included in the fields searched

Electronic data base consulted during the international search (name of data base and, where practicable, search terms used)

CNABS; CNTXT; VEN; DWPI; ENTXTC: 红外, 体温, 测温, 模型, 黑体, 训练, 学习, 神经网络, 损失函数, infrared, temperature, measur+, model, blackbody, train+, learn+, neural network, loss function

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111189545 A (INSTITUTE OF SEMICONDUCTORS, CHINESE ACADEMY OF SCIENCES) 22 May 2020 (2020-05-22) <br> description, paragraphs 0029-0105, and figures 1-8 | 1-38 |
| Y | CN 111982293 A (BEIJING SOUNDAL TECHNOLOGY CO., LTD.) 24 November 2020 (2020-11-24) <br> description, paragraphs 0088-0289, and figures 1-11 | 1-38 |
| Y | CN 111537084 A (SUN YAT-SEN UNIVERSITY) 14 August 2020 (2020-08-14) <br> description, paragraphs 0023-0047, and figures 1-6 | 1-38 |
| A | CN 111256835 A (NORTHWESTERN POLYTECHNICAL UNIVERSITY) 09 June 2020 (2020-06-09) <br> entire document | 1-38 |
| A | US 2007153871 A1 (FRADEN JACOB) 05 July 2007 (2007-07-05) <br> entire document | 1-38 |
| A | CN 111829665 A (SHENLAN AUTONOMOUS DRIVING RESEARCH INSTITUTE (SHANDONG) CO., LTD.) 27 October 2020 (2020-10-27) <br> entire document | 1-38 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 February 2022** | **01 March 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/133761**

| Patent document cited in search report | | | Publication date (day/month/year) | Patent family member(s) | | | Publication date (day/month/year) |
|---|---|---|---|---|---|---|---|
| CN | 111189545 | A | 22 May 2020 | CN | 111189545 | B | 18 May 2021 |
| CN | 111982293 | A | 24 November 2020 | None | | | |
| CN | 111537084 | A | 14 August 2020 | None | | | |
| CN | 111256835 | A | 09 June 2020 | None | | | |
| US | 2007153871 | A1 | 05 July 2007 | None | | | |
| CN | 111829665 | A | 27 October 2020 | None | | | |

Form PCT/ISA/210 (patent family annex) (January 2015)